(19) **Europäisches Patentamt / European Patent Office / Office européen des brevets**

(11) **EP 4 272 176 B1**

(12) **EUROPEAN PATENT SPECIFICATION**

(45) Date of publication and mention
of the grant of the patent:
**08.04.2026   Bulletin 2026/15**

(21) Application number: **22707377.2**

(22) Date of filing: **04.02.2022**

(51) International Patent Classification (IPC):
**G06T 15/08** (2011.01)        **G06N 3/02** (2006.01)
**G06T 15/20** (2011.01)

(52) Cooperative Patent Classification (CPC):
**G06T 15/205; G06N 3/045; G06N 3/0455;
G06N 3/0464; G06N 3/0475; G06N 3/084;
G06N 3/09; G06T 15/08;** G06N 3/044

(86) International application number:
**PCT/EP2022/052754**

(87) International publication number:
**WO 2022/167602 (11.08.2022 Gazette 2022/32)**

(54) **RENDERING NEW IMAGES OF SCENES USING GEOMETRY-AWARE NEURAL NETWORKS CONDITIONED ON LATENT VARIABLES**

RENDERING NEUER BILDER VON SZENEN UNTER VERWENDUNG GEOMETRIE-BEWUSSTER NEURONALER NETZE KONIDITIONIERT AUF LATENTE VARIABLEN

RENDRE DE NOUVELLES IMAGES DE SCÈNES À L'AIDE DE RÉSEAUX NEURONAUX SENSIBLES À LA GÉOMÉTRIE CONDITIONNÉS PAR DES VARIABLES LATENTES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.02.2021   US 202163145782 P**

(43) Date of publication of application:
**08.11.2023   Bulletin 2023/45**

(73) Proprietor: **GDM Holding LLC
Mountain View, CA 94043 (US)**

(72) Inventors:
• **KOSIOREK, Adam Roman
London N1C 4AG (GB)**
• **STRATHMANN, Heiko
London N1C 4AG (GB)**
• **REZENDE, Danilo Jimenez
London N1C 4AG (GB)**
• **ZORAN, Daniel
London N1C 4AG (GB)**
• **MORENO COMELLAS, Pol
London N1C 4AG (GB)**

(74) Representative: **Marks & Clerk GST
1 New York Street
Manchester M1 4HD (GB)**

(56) References cited:
• **KATJA SCHWARZ ET AL: "GRAF: Generative Radiance Fields for 3D-Aware Image Synthesis", ARXIV.ORG, CORNELL UNIVERSITY LIBRARY, 201 OLIN LIBRARY CORNELL UNIVERSITY ITHACA, NY 14853, 26 October 2020 (2020-10-26), XP081800027**
• **YIN MINGYU ET AL: "Novel View Synthesis on Unpaired Data by Conditional Deformable Variational Auto-Encoder", 3 November 2020, COMPUTER VISION - ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], PAGE(S) 87 - 103, ISBN: 978-3-030-58594-5, XP047593142**

**(Cont. next page)**

• MILDENHALL BEN ET AL: "NeRF: Representing Scenes as Neural Radiance Fields for View Synthesis", 3 November 2020, COMPUTER VISION - ECCV 2020 : 16TH EUROPEAN CONFERENCE, GLASGOW, UK, AUGUST 23-28, 2020 : PROCEEDINGS; [LECTURE NOTES IN COMPUTER SCIENCE ; ISSN 0302-9743], PAGE(S) 405 - 421, ISBN: 978-3-030-58594-5, XP047593649

• MUTLU URAS ET AL: "Training bidirectional generative adversarial networks with hints", PATTERN RECOGNITION., vol. 103, 1 July 2020 (2020-07-01), GB, pages 107320, XP055927596, ISSN: 0031-3203, Retrieved from the Internet <URL:https://faculty.ozyegin.edu.tr/ ethemalpaydin/files/2021/01/ Uras_bigan_PatRec.pdf> [retrieved on 20220602], DOI: 10.1016/j.patcog.2020.107320

**Description**

BACKGROUND

Tecnical Field: Image rendering with machine learning (neural networks).

This specification relates to processing data using machine learning models.

Machine learning models receive an input and generate an output, e.g., a predicted output, based on the received input. Some machine learning models are parametric models and generate the output based on the received input and on values of the parameters of the model.

Some machine learning models are deep models that employ multiple layers of models to generate an output for a received input. For example, a deep neural network is a deep machine learning model that includes an output layer and one or more hidden layers that each apply a non-linear transformation to a received input to generate an output.

Schwarz et al., "GRAF: Generative Radiance Fields for 3D-Aware Image Synthesis", arXiv:2007.02442v2, describes a 3D aware system for image synthesis that uses a generator that represents a scene by its radiance field, and a patch-based discriminator. The generator samples shape and appearance variables from standard Gaussian distributions to generate a target image. Yin et al. "Novel View Synthesis on Unpaired Data by Conditional Deformable Variational Auto-Encoder", ECCV 2020 Proceedings page(S) 87 - 103, ISBN: 978-3-030-58594-5, describes a cVAE-GAN framework in which view translation is performed by deforming a latent feature map with optical flows, computed from image feature and view condition vectors. Mutlu et al., "Training bidirectional generative adversarial networks with hints", Pattern Recognition, vol. 103, 1 July 2020, page 107320, GB ISSN: 0031-3203, describes a bidirectional GAN (BiGAN).

SUMMARY

The invention is set out in claim 1; further aspects are defined in the dependent claims.

This specification describes an image rendering system implemented as computer programs on one or more computers in one or more locations that can render a new image that depicts a scene from a perspective of a camera at a new camera location.

Throughout this specification, a "scene" can refer to, e.g., a real world environment, or a simulated environment (e.g., a simulation of real-world environment, e.g., such that the simulated environment is a synthetic representation of a real-world scene).

An "embedding" of an entity can refer to a representation of the entity as an ordered collection of numerical values, e.g., a vector, matrix, or other tensor of numerical values.

In one aspect there is described a system and method for rendering a new image that depicts a scene from a perspective of a camera at a new camera location. The system receives a plurality of observations characterizing the scene, each observation comprising an image of the scene, and data identifying a location of a camera that captured the image of the scene, and generates a latent variable representing the scene from the observations.

The system conditions a (trained) scene representation neural network on the latent variable representing the scene. The scene representation neural network defines a model of the scene as a three-dimensional (3D) radiance field. The scene representation neural network is configured to receive a representation of a spatial location in the scene and a representation of a viewing direction, and to process the representation of the spatial location in the scene, the representation of the viewing direction, and the latent variable representing the scene to generate an output that defines a radiance emitted in the viewing direction at the spatial location in the scene.

The system renders the new image that depicts the scene from the perspective of the camera at the new camera location by projecting radiance values from the model of the scene as a 3D radiance field onto an image plane of the camera at the new camera location.

As described later, the 3D radiance field specifies, e.g. directional radiance emitted from every spatial location in the scene. Thus the 3D radiance field may be a vector field that represents the scene as radiance (emitted light), at 3D positions in a 3D space of the scene, and over directions in 3D, e.g. as a viewing direction dependent emitted color, and optionally including a volume density as described later.

The model may be referred to as a geometric model because it is based on a geometric representation i.e. (3D) position and, as implied by radiance, direction. In implementations, rather than simply generating an image conditioned on the latent variable, the scene representation neural network models the scene based on (3D) spatial locations and directions, and then uses these to generate an output that defines a radiance in (i.e. along) the viewing direction. This model is then used to render the new image by projecting radiance values onto an image plane of the camera at the new camera location, e.g. accumulating or integrating along a ray to the camera, e.g. to a pixel in the image plane. This form of representation models the 3D space of the scene rather than the image from any particular viewpoint, and thus can guarantee consistency between different viewpoints as well as generalizing to new viewpoints. It is not essential that the scene representation neural network has any particular architecture; this advantage comes from types of representations processed and the outputs that are generated. This approach can also reduce the amount of computation and training needed as the scene representation neural network does not also have to learn how to render an image.

According to a first aspect, there is provided a method performed by one or more data processing apparatus for rendering a new image that depicts a scene from a perspective of a camera at a new camera location, the method comprising: receiving a plurality of observations characterizing the scene, wherein each observation comprises: (i) an image of the scene, and (ii) data identifying a location of a camera that captured the image of the scene; generating a latent variable representing the scene from the plurality of observations characterizing the scene; conditioning a scene representation neural network on the latent variable representing the scene, wherein the scene representation neural network conditioned on the latent variable representing the scene defines a geometric model of the scene as a three-dimensional (3D) radiance field and is configured to: receive a representation of a spatial location in the scene and a representation of a viewing direction; and process the representation of the spatial location in the scene, the representation of the viewing direction, and the latent variable representing the scene to generate an output that defines a radiance emitted in the viewing direction at the spatial location in the scene; and rendering the new image that depicts the scene from the perspective of the camera at the new camera location using the scene representation neural network conditioned on the latent variable representing the scene by projecting radiance values from the geometric model of the scene as a 3D radiance field onto an image plane of the camera at the new camera location.

In some implementations, generating the latent variable representing the scene from the plurality of observations characterizing the scene comprises: generating parameters of a probability distribution over a space of latent variables from the plurality of observations characterizing the scene; and sampling the latent variable representing the scene from the space of latent variables in accordance with the probability distribution over the space of latent variables.

In some implementations, generating parameters of the probability distribution over the space of latent variables from the plurality of observations characterizing the scene comprises:
generating a respective representation of each observation; processing the respective representation of each observation using an encoding neural network to generate a corresponding embedding of each observation; and generating the parameters of the probability distribution over the space of latent variables from the embeddings of the observations.

In some implementations, generating the parameters of the probability distribution over the space of latent variables from the embeddings of the observations comprises: averaging the embeddings of the observations, wherein the parameters of the probability distribution over the space of latent variables is based on the average of the embeddings of the observations.

In some implementations, generating the parameters of the probability distribution over the space of latent variables from the embeddings of the observations comprises: initializing current parameters of a current probability distribution over the space of latent variables; and for each time step in a sequence of time steps: sampling a current latent variable from the space of latent variables in accordance with the current probability distribution over the space of latent variables; conditioning the scene representation neural network on the current latent variable; rendering an image that depicts the scene from a perspective of a camera at a target camera location using the scene representation neural network conditioned on the current latent variable; determining a gradient, with respect to the current parameters of the current probability distribution over the space of latent variables, of an objective function that depends on: (i) the rendered image that depicts the scene from the perspective of the camera at the target camera location, and (ii) a target image of the scene captured from the camera at the target camera location; and updating the current parameters of the current probability distribution over the space of latent variables using: (i) the gradient of the objective function, and (ii) the embeddings of the observations.

In some implementations, the latent variable representing the scene comprises a plurality of latent sub-variables.

In some implementations, the scene representation neural network comprises a sequence of one or more update blocks, wherein each update block is configured to: receive a current joint embedding of the spatial location in the scene and the viewing direction; update the current joint embedding of the spatial location in the scene and the viewing direction using attention over one or more of the plurality of latent sub-variables of the latent variable.

In some implementations, the attention is multi-head query-key-value attention.

In some implementations, processing the representation of the spatial location in the scene, the representation of the viewing direction, and the latent variable representing the scene to generate an output that defines the radiance emitted in the viewing direction at the spatial location in the scene comprises: generating a joint embedding of the spatial location in the scene and the viewing direction from the representation of the spatial location in the scene and the representation of the viewing direction; updating the joint embedding using each update block in the sequence of one or more update blocks; and generating the output that defines the radiance emitted in the viewing direction at the spatial location in the scene from the updated joint embedding generated by a final update block in the sequence of update blocks.

In some implementations, each latent sub-variable comprises a plurality of channels, wherein each update block is assigned a respective latent sub-variable, and wherein for each update block, updating the current joint embedding using attention over one or more of the plurality of latent sub-variables of the latent variable comprises: updating the current joint embedding using attention over only the latent sub-variable that is assigned to the update block.

In some implementations, rendering the new image comprises, for each pixel of the new image: identifying a ray corresponding to the pixel that projects into the scene from the image plane of the camera at the new camera location; determining, for each of a plurality of spatial locations on the ray, a radiance emitted in a direction of the ray at the spatial location on the ray using the scene representation neural network conditioned on the latent variable representing the scene; rendering a color of the pixel in the new image based on the radiances emitted in the direction of the ray at the plurality of spatial locations on the ray.

In some implementations, the method further comprises: determining, for each of the plurality of spatial locations on the ray, a volume density of the scene at the spatial location which characterizes a likelihood that the ray would terminate at the spatial location; and rendering the color of the pixel in the new image based on both the radiances emitted in the direction of the ray and the volume densities at the plurality of spatial locations on the ray.

In some implementations, for each of the plurality of spatial locations on the ray, determining the radiance emitted in the direction of the ray at the spatial location and the volume density at the spatial location comprises: providing a representation of the spatial location on the ray and a representation of the direction of the ray to the scene representation neural network conditioned on the latent variable representing the scene to generate an output that defines the radiance emitted in the direction of the ray at the spatial location and the volume density at the spatial location.

In some implementations, rendering the color of the pixel in the new image based on both the radiances emitted in the direction of the ray and the volume densities at the plurality of spatial locations on the ray comprises: accumulating the radiances emitted in the direction of the ray and the volume densities at the plurality of spatial locations on the ray.

In some implementations, the scene representation neural network has a plurality of neural network parameters, wherein before being used to render the new image of the scene, the scene representation neural network is trained to determine trained values of the neural network parameters from initial values of the neural network parameters, wherein training the scene representation neural network comprises, for each of a plurality of other scenes: conditioning the scene representation neural network on a latent variable representing the other scene; and rendering one or more images that each depict the other scene from the perspective of a camera at a location in the other scene using the scene representation neural network conditioned on the latent variable representing the other scene; and updating current values of the neural network parameters of the scene representation neural network using gradients of an objective function that depends on the images of the other scene rendered using the scene representation neural network conditioned on the latent variable representing the other scene.

According to another aspect, there are provided one or more non-transitory computer storage media storing instructions that when executed by one or more computers cause the one or more computers to perform operations of the methods described herein.

According to another aspect, there is provided a system comprising: one or more computers; and one or more storage devices communicatively coupled to the one or more computers, wherein the one or more storage devices store instructions that, when executed by the one or more computers, cause the one or more computers to perform operations of the methods described herein.

The subject matter described in this specification can be implemented in particular embodiments so as to realize one or more of the following advantages.

The image rendering system enables rendering of new images of a scene, i.e., that depict the scene from the perspective of cameras at new camera locations, based on a set of existing images of the scene and data defining the respective location of the camera that captured each existing image. Thus the image rendering system thus enables more efficient use of resources, e.g., memory resources and camera resources, by enabling new images of a scene to be synthetically rendered as-needed from a set of existing images. More specifically, in the absence of the image rendering system, generating a new image of the scene may require physically capturing the new image using a camera, which requires use of camera resources and may be infeasible for practical reasons. Moreover, synthetically rendering new images of the scene as-needed reduces use of memory resources, e.g., by freeing the memory space that would otherwise be required to store the new images before they are needed.

The image rendering system described in this specification can render new images of a scene using a scene representation neural network that, when conditioned on a latent variable representing the scene, defines a geometric model of the scene. Explicitly incorporating a geometric scene model enables the image rendering system to render new images of a scene with higher geometric accuracy and realism, e.g., compared to systems that render new images without incorporating explicit geometric models. For example, incorporating a geometric scene model enables the image rendering system to more effectively render new images from camera locations that are significantly different than the locations of the cameras that captured the existing images of a scene.

The image rendering system trains the parameter values of the scene representation neural network (i.e., that implements the geometric scene model) using a collection of images captured from multiple different scenes. Thereafter, the image rendering system can use the scene representation neural network to render images of a new scene without re-training its parameter values on images captured from the new scene. In particular, rather than re-training the scene representation neural network on images captured from the new scene, the image rendering system conditions the scene representation neural network on a latent variable that represents the new scene. Thus the geometric scene model learns structure that is shared across scenes, and information about a specific scene is encoded in the latent variable(s). Conditioning the scene representation neural network on latent variables representing new scenes enables the image rendering system to avoid re-training the scene representation neural network for each new scene, thereby reducing consumption of computational resources (e.g., memory and computing power).

Moreover, the image rendering system can generate a latent variable that effectively represents a new scene and enables accurate rendering of new images using significantly fewer images of the new scene than would be required to re-train the scene representation neural network. Thus, by conditioning the scene representation neural network on latent variables representing new scenes (rather than, e.g., re-training the scene representation neural network for each new scene), the image rendering system enables more efficient use of resources.

The details of one or more embodiments of the subject matter of this specification are set forth in the accompanying drawings and the description below. Other features, aspects, and advantages of the subject matter will become apparent from the description, the drawings, and the claims.

## BRIEF DESCRIPTION OF THE DRAWINGS

FIG. 1 is a block diagram of an example image rendering system.

FIG. 2 illustrates an example of volumetric rendering of an image of a scene.

FIG. 3 is a block diagram of the example image rendering system in more detail.

FIG. 4 is a block diagram of an example scene representation neural network included in an image rendering system.

FIG. 5 is a flow diagram of an example process for rendering a new image using an image rendering system.

FIG. 6 is a flow diagram of an example process for training an encoding neural network and a scene representation neural network included in an image rendering system.

FIG. 7 and FIG. 8 illustrate experimental results achieved using the image rendering system.

Like reference numbers and designations in the various drawings indicate like elements.

## DETAILED DESCRIPTION

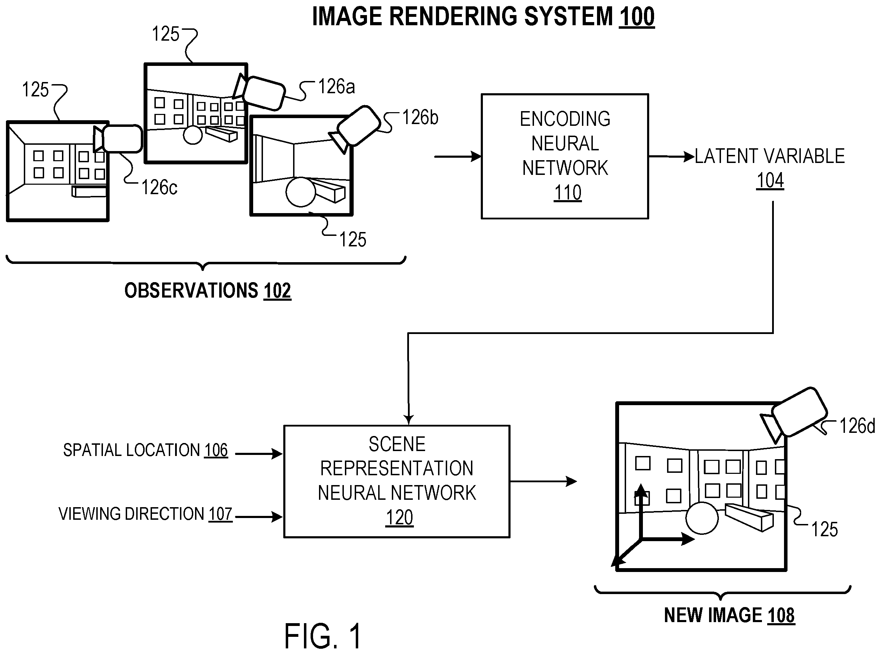

FIG. 1 is a block diagram of an example image rendering system 100 that can render a new image 108 that depicts a scene 125 from a perspective of a camera at a new camera location 126d. The image rendering system 100 is an example of a system implemented as computer programs on one or more computers in one or more locations in which the systems, components, and techniques described below are implemented.

An "image" can generally be represented, e.g., as an array of "pixels," where each pixel is associated with a respective spatial location in the image (i.e. with a respective spatial location in the image plane of the camera) and corresponds to a respective vector of one or more numerical values representing image data at the spatial location. For example, a two-dimensional (2D) RGB image can be represented by a 2D array of pixels, where each pixel is associated with a respective three-dimensional (3D) vector of values representing the intensity of red, green, and blue color at the spatial location corresponding to the pixel in the image.

Throughout this specification, a "scene" can refer to, e.g., a real world environment, or a simulated environment. For example, as illustrated in FIG. 1, the scene 125 can include various geometric objects in a simulated environment. A camera "location" can refer to, e.g., a spatial location and/or an orientation of the camera. A spatial location of a camera can be represented, e.g., as a three-dimensional vector indicating the spatial position of the camera. The orientation of the camera can be represented as, e.g., a three-dimensional vector defining a direction in which the camera is oriented, e.g., the yaw, pitch, and roll of the camera.

The image rendering system 100 can render the new image 108 of the scene 125 based on observations 102 characterizing the scene 125. Each observation can include: (i) an image of the scene 125, and (ii) data identifying the location of the camera that captured the image of the scene 125. For example, as illustrated in FIG. 1, each image depicts the scene 125 from a different viewing perspective, e.g., from the perspective of a camera at a respective camera location. For example, a first image depicts the scene from the perspective of the camera at location 126a, a second image depicts the scene 125 from the perspective of the camera at location 126b, and a third image depicts the scene 125 from the perspective of the camera at location 126c.

Some, or all, images included in the observations 102 can depict the scene 125 from different viewing perspectives. Generally, the observations 102 can include images depicting the scene 125 from any number of different viewing perspectives, e.g., 1, 5, 50, 100, or 1000 different viewing perspectives.

The image rendering system 100 can process the observations 102 and data defining the new camera location 126d to render the new image 108 that depicts the scene 125 from the perspective of the camera at the new camera location 126d (e.g., at a new orientation and/or spatial location of the camera in the scene 125). In some implementations, the new location 126d of the camera can be different from any of the camera locations 126a, 126b, 126c associated with the images included in the observations 102. In other words, the system 100 can render a new image 108 that depicts the scene 125 from an entirely new viewing perspective.

The image rendering system 100 can render the new image 108 based on a latent variable 104 representing the scene 125. A "latent variable" can generally refer to an embedding in a latent space. Generally, the latent variable 104 can implicitly represent features that are specific to the scene 125, e.g., positions and kinds of objects depicted in the scene 125, colors and lighting in the scene 125, or any other appropriate features of the scene 125. In a particular example, the latent variable can be, e.g., a 128-dimensional vector of numerical values. As another particular example, the latent variable can be, e.g., a three-dimensional array of size $[H_z, W_z, D_z]$.

The image rendering system 100 can generate the latent variable 104 using an encoding neural network 110. For example, the encoding neural network 110 can be configured to process the observations 102, including images that depict the scene 125 from different viewing perspectives and data identifying respective camera locations 126a, 126b, 126d, to generate parameters of a probability distribution over a space of latent variables.

After using the encoding neural network 110 to generate the parameters of the probability distribution, the image rendering system 100 can sample the latent variable 104 representing the scene 125 from the space of latent variables in accordance with the probability distribution. The system 100 can then use the latent variable 104 to condition a scene representation neural network 120, and render the new image 108 of the scene 125 from the perspective of the camera at the new camera location 126d using the scene representation neural network. Generally, "conditioning" the scene representation neural network 120 on the latent variable 104 representing the scene 125 can refer to providing the latent variable 104 as an input to the scene representation neural network 120, e.g., to be processed along with other inputs to the scene representation neural network.

The scene representation neural network 120, when conditioned on the latent variable 104 representing the scene 125, can define a geometric model of the scene 125 as a three-dimensional radiance field that specifies, e.g., directional radiance emitted at every spatial location in the scene 125. More specifically, by processing a viewing direction 107 and a spatial location 106 in the scene 125 (along with the conditioning latent variable 104), the scene representation neural network 125 can output values defining a corresponding radiance emitted in that viewing direction 107 at that spatial location 106 in the scene 125. The radiance emitted in a viewing direction at a spatial location in the scene can characterize, e.g., the amount of light passing through that spatial location in that viewing direction in the scene 125. In other words, after being conditioned on the latent variable 104, the scene representation neural network 120 can generate a corresponding emitted radiance each time it is "queried" with a particular spatial location 106 and viewing direction 107 in the scene 125.

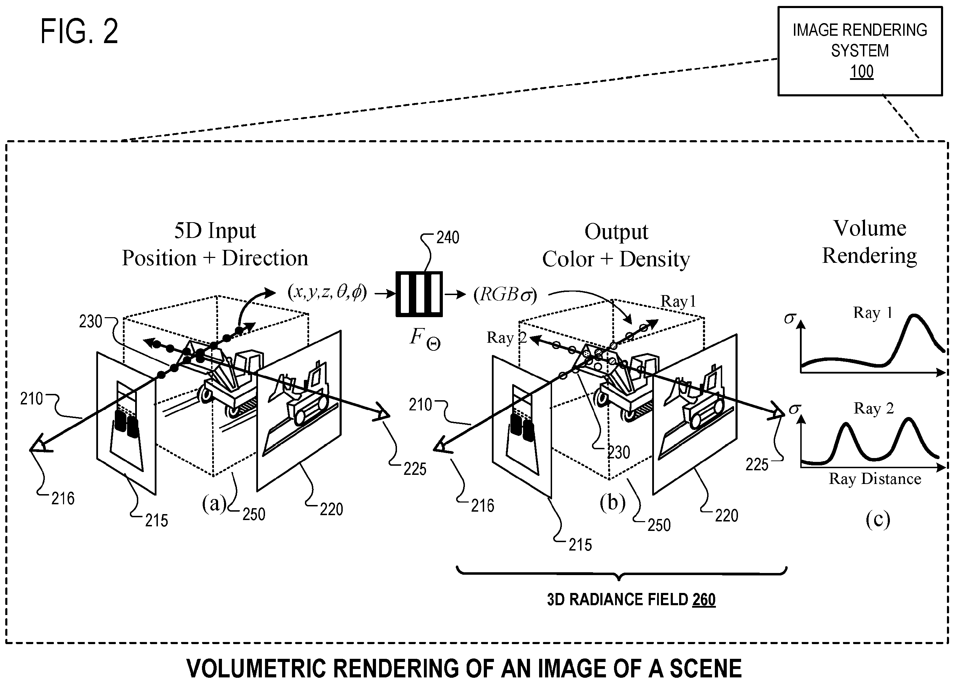

Moreover, each pixel in the new image 108 (i.e., that would be captured by the camera at the new camera location 126d) can be associated with a ray that projects into the scene 125 from an image plane of the camera at the new camera location 126d. As will be described in more detail below with reference to FIG. 2, for each pixel in the new image, the image rendering system 100 can use the scene representation neural network 120, conditioned on the latent variable 104, to generate multiple values of directional emitted radiance along the ray corresponding to the pixel. Then, the image rendering system 100 can render the new image 108, e.g., pixel by pixel, by projecting the radiance values from the geometric model of the scene onto the image plane of the camera at the new camera location 126d, e.g., by using volumetric rendering, which will be described in more detail below with reference to FIG. 2. The new image 108 can depict the scene 125 from the perspective of the camera at the new camera location 126d (e.g., from an entirely new viewing perspective).

As a particular example, the spatial location 106 in the scene 125 can be represented as, e.g., a three-dimensional vector of spatial coordinates $x$. The viewing direction 107 in the scene 125 can be represented as, e.g., a three-dimensional unit vector $d$. As another example the viewing direction can be represented using a two-dimensional vector $(\theta, \phi)$ in a spherical coordinate system. The scene representation neural network $G$, conditioned on the latent variable $z$ representing the scene 125, and having a set of parameters $\theta$, can process the representation $(x, d)$ to generate the radiance emitted in that viewing direction at that spatial location in the scene, e.g., $(r, g, b)$, where r is the emitted red color, $g$ is the emitted green color, and $b$ is the emitted blue color, as shown in Equation (1).

$$G_{\vartheta}(\cdot, z) : (x, d) \rightarrow ((r, g, b), \sigma) \qquad (1)$$

In some implementations, the output of the scene representation neural network 120 can further include a volume density $\sigma$ of the scene 125 at the spatial location $x$. Generally, the volume density at a spatial location in the scene can characterize any appropriate aspect of the scene 125 at the spatial location. In one example, the volume density at a spatial location in the scene can characterize a likelihood that a ray of light travelling through the scene would terminate at the spatial location $x$ in the scene 125. In particular, the scene representation neural network can be configured such that the volume density $\sigma$ is generated independently from the viewing direction $d$, and thus varies only as a function of spatial locations in the scene 125. This can encourage volumetric consistency across different viewing perspectives of the same scene 125.

In some cases, the volume density can have values, e.g., $\sigma \geq 0$, where the value of zero can represent, e.g., a negligible likelihood that a ray of light would terminate at a particular spatial location, e.g., possibly indicating that there are no objects in the scene 125 at that spatial location. On the other hand, a large positive value of volume density can possibly indicate that there is an object in the scene 125 at that spatial location and therefore there is a high likelihood that a ray would terminate at that location.

As described above, the latent variable 104 can capture features that are specific to the scene 125, e.g., positions and kinds of objects depicted in the scene 125, colors and lighting in the scene 125, or any other appropriate features of the scene 125. That is, the latent variable 104 can be understood as a semantic representation of the scene.

The scene representation neural network 120 can be trained using a collection of images captured in respective scenes. After training, the parameters of the neural network 120 can therefore capture, or store, shared information between different scenes, e.g., textures and shapes, properties of common elements, or any other features shared between different scenes.

Explicitly incorporating the geometric model of the scene 125 as the three-dimensional radiance field can allow the image rendering system 100 to render new images of the scene 125 with higher geometric accuracy and realism, e.g., compared to systems that render new images without incorporating explicit geometric models. For example, incorporating a geometric scene model (i.e., in the form of the radiance field represented by the scene representation neural network) enables the image rendering system 100 to more effectively render new images from camera locations that are significantly different than the locations of the cameras that captured the images included in the observations 102.

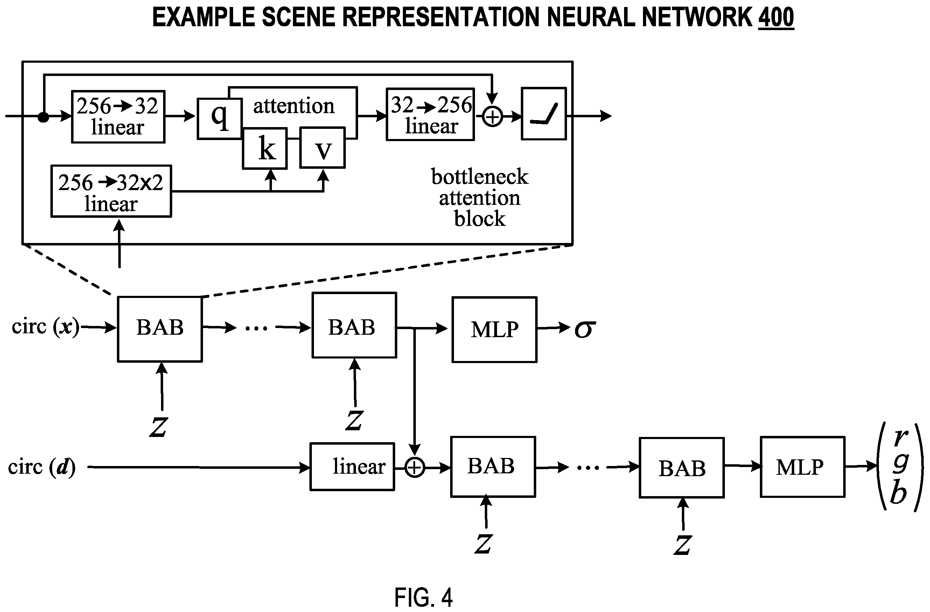

The encoding neural network 110 and the scene representation neural network 120 can each have any appropriate neural network architectures that enables them to perform their described functions. For example, they can include any appropriate neural network layers (e.g., convolutional layers, fully connected layers, recurrent layers, attention layers, etc.) in any appropriate numbers and connected in any appropriate configuration (e.g., as a linear sequence of layers). As a particular example, the encoder neural network 110 can include a sequence of one or more encoder blocks and an output block. Each encoder block can include, e.g., one or more convolutional neural network layers, a batch normalization neural network layer, and a residual connection that combines the input into the encoder block with the output from the encoder block. The output block can include, e.g., one or more batch normalization neural network layers and one or more convolutional neural network layers. An example architecture of the scene representation neural network 120 will be described in more detail below with reference to FIG. 4.

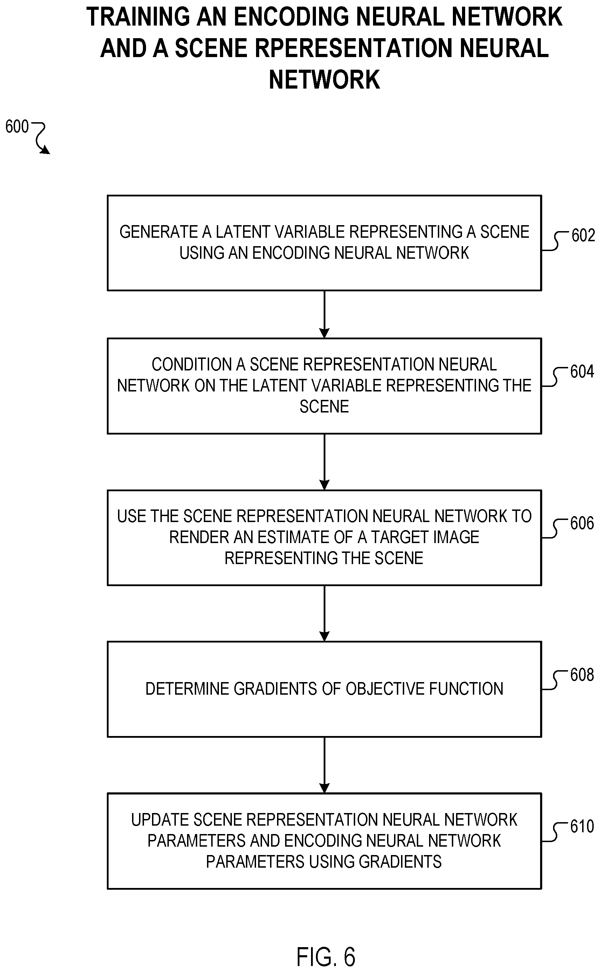

In some implementations, the image rendering system 100 can include a training engine that can jointly train the scene representation neural network 120 and the encoding neural network 110 on a set of training data over multiple training iterations. An example process for training the scene representation neural network 120 and the encoding neural network is described in more detail below with reference to FIG. 6.

After training, the scene representation neural network 120 can be conditioned on a latent variable representing any scene. After being conditioned on the latent variable representing a particular scene, the image rendering system 100 can use the neural network 120 to render one or more images depicting that particular scene from different viewing perspectives. That is, after generating a latent variable 104 representing a scene from a collection of observations of the scene, the image rendering system 100 can generate any desired number of new images of the scene, using the scene representation neural network conditioned on the latent variable, without regenerating the latent variable.

The image rendering system 100 can be used in any of a variety of possible applications. A few examples of possible applications of the image rendering system 100 are described in more detail next.

In one example, the image rendering system 100 can be used as part of a software application (e.g., referred to for convenience as a "street view" application) that provide users with access to interactive panoramas showing physical environments, e.g., environments in the vicinity of streets. In response to a user request to view a physical environment from a perspective of a camera at a new camera location, the street view application can provide the user with a rendered image of the environment generated by the image rendering system. The image rendering system can render the new image of the environment based on a collection of existing images of the environment, e.g., that were previously captured by a camera mounted on a vehicle that traversed the environment.

In another example, the image rendering system 100 can be used to process a collection of one or more images (e.g., x-ray images) of a biomolecule (e.g., protein), along with data defining the location of the imaging sensor that captured the images of the biomolecule, to render new images of the biomolecule from new viewpoints.

In another example, the image rendering system 100 can be used to render images of a virtual reality environment, e.g., implemented in a virtual reality headset or helmet. For example, in response to receiving a request from a user to view the virtual reality environment from a different perspective, the image rendering system can render a new image of the virtual reality environment from the desired perspective and provide it to the user.

The techniques described herein can be extended to sequences of images e.g. video.

FIG. 2 illustrates an example of volumetric rendering of an image 215 of a scene 250 using a radiance field. The volumetric rendering can be used by an image rendering system (e.g., the system 100 in FIG. 1) to render an image 215 depicting the scene 250 from a perspective of a camera at a new camera location 216. In particular, the image rendering system can use a scene representation neural network 240, defining a geometric model of the scene as a three-dimensional radiance field 260, to render the image 215.

As described above with reference to FIG. 1, the scene representation neural network 240 included in the image rendering system (e.g., the neural network 120 in FIG. 1), when conditioned on a latent variable representing the scene 250 (e.g., the latent variable 104 representing the scene 125 in FIG. 1) can define the geometric model of the scene 250 as the three-dimensional radiance field 260 specifying, e.g., directional emitted radiance at different spatial locations in the scene 250.

The scene representation neural network input can include a representation of spatial location in the scene 250 and a representation of a viewing direction in the scene 250. As shown in FIG. 2, the viewing direction can be, e.g., the direction of a ray 210 having a particular orientation, and casting from the image plane of the camera at the new camera location 216 and through the scene 250. The representation of the viewing direction can therefore be, e.g., a three-dimensional unit vector $d$ defining the orientation of the ray 210. The spatial location 230 in the scene 250 (e.g., illustrated by a circle on the ray 210) can be represented as, e.g., a three-dimensional vector of spatial coordinates $x$. Generally, each pixel in the image 215 generated by the camera at the new camera location 216 can be associated with a ray 210 that casts from the image plane of the camera and into the scene 250, and multiple spatial location locations 230 on the ray 210, each corresponding to a particular spatial location in the scene 250. (The direction and position of a ray corresponding to a pixel in the new image can be computed as a predefined function of the parameters of the camera, e.g., the position and orientation of the camera, the focal length of the camera, etc.).

The image rendering system can query the scene representation neural network 240 conditioned on the latent variable representing the scene 250, with a particular spatial location 230 and viewing direction 210 in the scene 250. The scene representation neural network 240 can generate a corresponding output defining radiance $(r, g, b)$ emitted in that direction 210 at that spatial location 230 in the scene 250. In some implementations, the neural network 240 can also generate a volume density $\sigma$ at that spatial location 230 in the scene 250, e.g., characterizing a likelihood that the ray 210 would terminate at the spatial location 230 in the scene 250. After generating the radiance values $(r, g, b)$ by using the scene representation neural network 240, the image rendering system can render the new image 215 of the scene 250 by projecting these values onto the image plane of the camera at the new camera location 216.

As a particular example, for each pixel in the new image corresponding to the camera at the new camera location, the image rendering system can identify the corresponding ray 210 corresponding to the pixel that projects from the image plane of the camera and into the scene 250. The image rendering system can use the neural network 240 to determine the radiance values $(r, g, b)$ for each of multiple spatial locations 230 (e.g., represented as circles in FIG. 2) along the ray 210, e.g., at predefined intervals along the ray. Then, the system can render a color of the pixel in the new image based on the radiances $(r, g, b)$, e.g., by accumulating the radiances $(r, g, b)$ determined for different spatial locations on the ray 210. The image rendering system can repeat this process for each pixel in the new image captured by the camera at the new camera location 216, thereby rendering the color of every pixel in the new image 215.

In some implementations, for each spatial location on the ray 210, the image rendering system can use the neural network 240 to also determine the volume density $\sigma$ of the scene 250 at the spatial location. The image rendering system can render the color of each pixel in the new image based on both: (i) the radiance values, and (ii) the volume densities, at points along the ray corresponding to the pixel. The graphs included in FIG. 2 illustrate an example of the volume density $\sigma$ varying as a function of spatial location 230 in the scene 250, each graph being specific to a particular viewing direction (e.g., "Ray 1" or "Ray 2").

In order to render the new image, the system can render the color of each pixel in the new image 215 by accumulating the radiances emitted in the direction of the ray 210 and the volume densities $\sigma$ at multiple spatial locations 230 on the ray 210. The system can accumulate the radiances and volume densities along a ray corresponding to a pixel using any appropriate accumulation technique. For example, the system can accumulate the radiances and volume densities by scaling each radiance value along the ray by corresponding volume density, and then summing the scaled radiance values. Other techniques for accumulating radiances and volume densities along a ray corresponding to a pixel are described with reference to: Mildenhall et al., "NeRF: Representing scenes as neural radiance fields for view synthesis," arXiv:2003.08934v2 (2020) (which also describes a correspondence between volume densities and alpha values).

Explicitly incorporating the geometric model 260 of the scene 250 enables the image rendering system to render new images of the scene 250 with higher geometric accuracy and realism, e.g., compared to systems that render new images without incorporating explicit geometric models. For example, incorporating the geometric model 260 enables the system to more effectively render new images from camera locations that are significantly different than the locations of the cameras that captured the existing images of a scene. As a particular example, the system can use the neural network 240 conditioned on the latent variable representing the scene 250 to render another new image 220 of the scene 250 from the perspective of the camera at a completely different camera location 225 (e.g., illustrated as being perpendicular to the camera location 216).

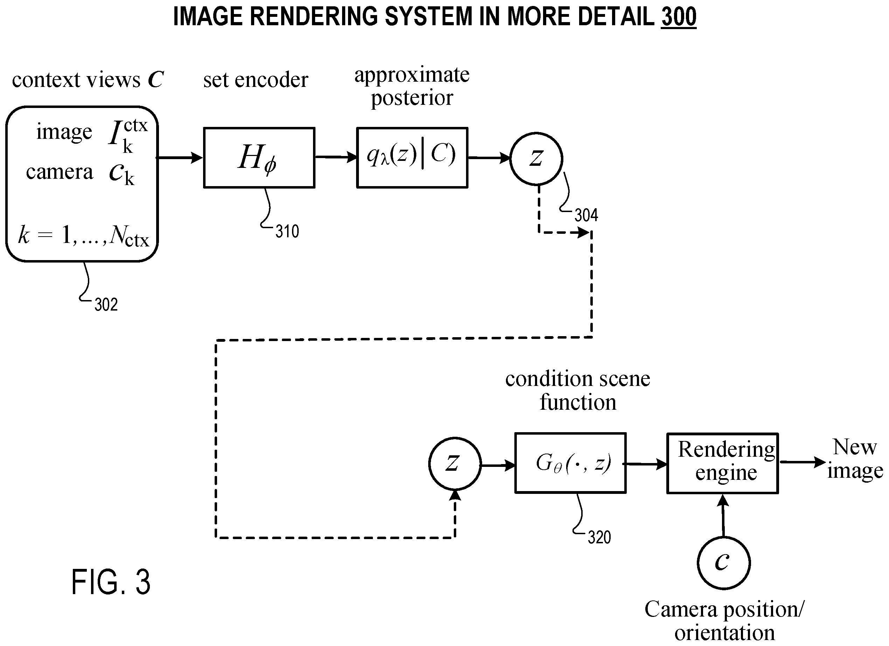

The image rendering system will be described in more detail next with reference to FIG. 3.

FIG. 3 is a block diagram of the example image rendering system 300 (e.g., image rendering system 100 in FIG. 1) in more detail. The image rendering system 300 is an example of a system implemented as computer programs on one or more computers in one or more locations in which the systems, components, and techniques described below are implemented.

As described above with reference to FIG. 1, the image rendering system 300 can include an encoding neural network 310 and a scene representation neural network 320. The system 300 can process multiple observations 302, each observation including an image of a scene, and data identifying a location of a camera that captured the image of the scene, to generate a latent variable 304 representing the scene. The system 300 can condition the scene representation neural network 320 on the latent variable 304, and use it to render a new image 308 depicting the scene from the perspective of the camera at a new camera location.

The image rendering system 300 can use the encoding neural network 310 to process the observations 302 and generate parameters of a probability distribution over a space of latent variables. The system 300 can then sample the latent variable representing the scene from the space of latent variables in accordance with the probability distribution. The encoding neural network 110 can generate the parameters of the probability distribution in any variety of ways. In one example, the encoding neural network 100 can combine embeddings of the observations 102, e.g., that are generated by processing the observations 102 using the encoding neural network 110.

More specifically, before generating the parameters of the probability distribution over the space of latent variables, the system can process the observations 302 to generate a respective representation of each observation 302.

For each pixel in the image depicting the scene, the system can use camera parameters (e.g., field of view, focal length, camera spatial location, camera orientation, and the like) of the camera that captured the image to determine parameters (e.g., orientation and position parameters) of a ray, corresponding to the pixel, that projects from the image plane of the camera and into the scene. The ray of each pixel that projects into the scene can have an orientation, e.g., represented as a three-dimensional unit vector d. The system can generate a representation of each observation by, for each pixel in the image included in the observation, concatenating data defining the orientation of the corresponding ray to the pixel. In other words, each pixel in the image can have an associated five or six-dimensional feature vector $(c, d)$, e.g., where c represents the RGB color of the pixel and $d$ represents the orientation of the ray corresponding to the pixel.

As a particular example, for observation $k$ that specifies the image $I_k$ of the scene and corresponding camera location $c_k$ that captured the image of the scene, the system can generate the corresponding representation $C_k$ of the observation as follows:

$$C_k = concat(I_k, map\_to\_rays(c_k)) \qquad (2)$$

where "concat" is a concatenation operator, and "map_to_rays" is an operator that determines an orientation of a respective ray corresponding to each pixel in the image, as described above. After generating the representations of the observations 302 according, e.g., in accordance with equation (2), the system can provide the respective representation of each observation as an input to the encoding neural network 310. The encoding neural network 310 can be configured to process a representation of an observation to generate an embedding of the observation. An "embedding" of an observation can refer to a representation of the observation as an ordered collection of numerical values, e.g., a vector, matrix, or other tensor of numerical values.

The system can use the embeddings of the observations 302 to generate the parameters of the probability distribution over the space of latent variables. For example, the system can process the respective embedding of each observation to generate a combined embedding, and then process the combined embedding using one or more neural network layers to generate the parameters of the probability distribution over the space of latent variables. The probability distribution $q$ over the space of latent variables $z$ having parameters $\lambda$ conditioned on the set of observations $C$ can be represented as $q_\lambda(z \mid C)$. In one example, the system can generate the combined embedding $h$ by averaging the embeddings of the observations $h_k$, e.g.:

$$h = \frac{1}{N}\sum_{k=1}^{N} h_k \qquad (3)$$

where $N$ is the total number of observations, $h_k$ is the embedding of observation $k$, and $h$ is the average of the embeddings. The system 100 can then generate the parameters $\lambda$ of the probability distribution $q_\lambda(z \mid C)$ over the space of latent variables $z$ as follows:

$$\lambda = MLP(h) \qquad\qquad (4)$$

where "MLP" can refer to a multi-layer perceptron.

The image rendering system 300 can sample the latent variable representing the scene from the space of latent variables in accordance with the probability distribution $q_\lambda(z\,|C)$ having parameters $\lambda$ determined by the encoding neural network 310. In one example, the probability distribution can be parametrized, e.g., as a multi-dimensional Gaussian distribution, where each dimension is parametrized by respective mean and standard deviation parameters.

Next, the system 300 can condition the image rendering neural network 320 on the latent variable and render the new image depicting the scene from the perspective of the camera at the new camera location using a rendering engine, e.g., as described above with reference to FIG. 2.

An example scene representation neural network 320 included in the image rendering system 300 will be described in more detail next.

FIG. 4 is a block diagram of an example scene representation neural network 400 included in an image rendering system (e.g., the scene representation neural network 120 in FIG. 1). The scene representation neural network 400 is an example of a system implemented as computer programs on one or more computers in one or more locations in which the systems, components, and techniques described below are implemented.

As described above with reference to FIG. 1 and FIG. 3, an encoding neural network, included in the image rendering system, can process multiple observations, each including an image of a scene and data identifying a location of the camera that captured the image, to generate parameters of a probability distribution over a space of latent variables. The system can sample the latent variable representing the scene in accordance with the probability distribution. Then, the system can condition the scene representation neural network 400 on the latent variable, which causes the scene representation neural network to define a 3D geometric model of the scene as a 3D radiance field. More specifically, while conditioned on the latent variable, the scene representation neural network can process a representation of a spatial location in the scene and a representation of a viewing direction to generate data defining a radiance emitted in the viewing direction at the spatial location in the scene, and optionally, a volume density at the spatial location in the scene. The system uses the 3D radiance field defined by the scene representation neural network conditioned on the latent variable to render a new image of the scene from the perspective of a camera at a new camera location, e.g., using volumetric rendering techniques.

In some implementations, the latent variable representing the scene can include multiple (e.g., a set of) latent sub-variables e.g. variables that can be combined to form the latent variable. For example, the latent variable z can be an array having a size $[H_z \times W_z \times D_z]$. The array can be partitioned into multiple sub-arrays, and each sub-array can define a respective sub-variable of the latent variable. As a particular example, the array can be partitioned into sub-arrays along the channel dimension of the latent variable (e.g., $D_z$), e.g., such that each sub-array corresponds to a respective proper subset of (i.e. a subset that is less than all of) the channel dimensions, and has size $[H_z \times W_z \times D'_z]$, where $D'_z < D_z$. Each latent sub-variable can be understood as a collection of latent embeddings $\{(h, w, :): 1 \leq h \leq H_z, 1 \leq w \leq W_z\}$, where each latent embedding has dimensionality $D'_z$.

In such cases, the scene representation neural network 400 can process the representations of the spatial location and the viewing direction in the scene to generate an output that defines the radiance emitted in the viewing direction at that spatial location in the scene using one or more update blocks. Specifically, the scene representation neural network 400 can include a sequence of one or more update blocks (e.g., "BAB" in FIG. 4), each update block being configured to update an input embedding using attention over a corresponding latent sub-variable, e.g. by applying an attention mechanism to the corresponding latent sub-variable to generate a combined latent embedding that is used to update the input embedding. There are many different attention mechanisms that may be used. The attention mechanism may be a query-key-value attention mechanism, e.g. in which the combined latent embedding is computed as a weighted sum of values, where the weight for each value is computed by a compatibility function, e.g. a dot product or scaled dot product, of the query with the corresponding key, the input embedding is mapped to the query, and each latent embedding included in the latent sub-variable is mapped to the key and to the value. The attention mechanism may implement multi-head attention, that is it may apply multiple different attention mechanisms in parallel.

For example, to update an input embedding using attention over a latent sub-variable, an update block can generate a respective attention weight for each latent embedding included in the latent sub-variable, and generate a combined latent embedding based on the latent embeddings included in the latent sub-variable and the corresponding attention weights. As a particular example, the update block can generate the combined latent embedding as a weighted sum of the latent embeddings in the latent sub-variable, e.g., by multiplying each latent embedding in the latent sub-variable by the corresponding weight and summing the weighted latent embeddings. The update block can then use the combined latent embedding to update the input embedding, e.g., by replacing the input embedding with the combined latent embedding, by adding the combined latent embedding to the input embedding, or in any other appropriate manner.

In some implementations, the update blocks can perform a query-key-value (QKV) attention operation, e.g.,

updating the input embedding using attention over the latent embeddings in a latent sub-variable using query (Q), key (K), and value (V) embeddings. In particular, each update block can include: (i) a query sub-network, (ii) a key sub-network, and (iii) a value sub-network. For each input embedding, the query sub-network can be configured to process the input embedding to generate a respective query embedding (Q) for the input embedding. The key sub-network can be configured to process each latent embedding included in the latent sub-variable corresponding to the update block to generate a respective key embedding (K). Similarly, the value sub-network can be configured to process each latent embedding included in the latent sub-variable corresponding to the update block to generate a respective value embedding (V).

Each update block can then use the query embeddings (Q), the key embeddings (K), and the value embeddings (V), to update the input embedding. Specifically, each update block can generate the attention weight for each latent embedding in the corresponding latent sub-variable, e.g., as an inner (e.g., dot) product of the query embedding (Q) with each of the key embeddings (K). Based on the set of latent embeddings in the latent sub-variable and the attention weights, each update block can generate the combined latent embedding, e.g., as a linear combination of the value embeddings (V) weighted by their respective attention weights. Lastly, each update block can update the input embedding using the combined latent embedding.

As a particular example, the scene representation neural network 400 can generate an embedding $circ(\boldsymbol{x})$ of the representation of the spatial location $\boldsymbol{x} = (x_1, x_2, x_3)$ in the scene, e.g., as follows:

$$circ(\boldsymbol{x}) = \begin{cases} circ(x_1) \\ circ(x_2) \\ circ(x_3) \end{cases}$$

$$circ(x_i) = \begin{pmatrix} \sin(2^0 \pi x_i) \\ \cos(2^0 \pi x_i) \\ \dots \\ \sin(2^{L-1} \pi x_i) \\ \cos(2^{L-1} \pi x_i) \end{pmatrix} \tag{5}$$

The scene representation neural network 400 can use one or more update blocks to update the embedding $circ(\boldsymbol{x})$ using attention over the latent sub-variables, e.g., as described above. The neural network 400 can then process the updated embedding using a multi-layer perceptron neural network layer (e.g., "MLP" in FIG. 4) to generate an output that defines the volume density $\sigma$ at that spatial location in the scene.

Moreover, the scene representation neural network 400 can generate an embedding $circ(d)$ of the representation of the viewing direction, e.g., using an analogous procedure as the one described with reference to equation (5). The neural network 400 can then process the embedding $circ(d)$ using a linear neural network layer (e.g., "linear" in FIG. 4), and generate a joint embedding by combining (e.g., concatenating) the output from the linear layer with the updated embedding of $circ(x)$ generated by an update block.

The scene representation neural network 400 can use each update block in a sequence of update blocks to update the joint embedding using attention over the set of latent sub-variables, e.g., as described above. After the joint embedding has been updated by the last update block in the sequence of update blocks, the neural network 400 can process the joint embedding using a multi-layer perceptron neural network layer to generate an output that defines the radiance emitted in the viewing direction at that spatial location in the scene (e.g., *(r, g, b)* in FIG. 4).

As described above, the latent variable can be an array, and the array can be partitioned into multiple sub-arrays, where each sub-array can define a respective sub-variable of the latent variable. As a particular example, the array can be partitioned into sub-arrays along the channel dimension of the latent variable (e.g., $D_z$), e.g., such that each sub-array corresponds to a respective proper subset of (i.e. a subset that is less than all of) the channel dimensions. That is the channels of a latent sub-variable may correspond to channels of the latent variable, when the latent variable comprises an array. In some implementations, each update block of the scene representation neural network 400 can be assigned a respective latent sub-variable (whether or not each latent sub-variable comprises a plurality of channels). In such cases, each update block can update its input embedding using attention over only the latent embeddings of the latent sub-variable assigned to the update block.

The scene representation neural network 400 and the update blocks can have any appropriate neural network architecture that enables them to perform their described functions. For example, in addition to including attention neural network layers, the update blocks can further include any other appropriate neural network layers (e.g., convolutional layers, fully connected layers, recurrent layers, attention layers, etc.) in any appropriate numbers (e.g., 2 layers, 5 layers, or 10 layers) and connected in any appropriate configuration (e.g., as a linear sequence of layers). The scene representation neural network 400 can include any number of update blocks, and any number of other neural network blocks configured to perform any appropriate operations.

An example process for rendering the new image using the image rendering system will be described in more detail next.

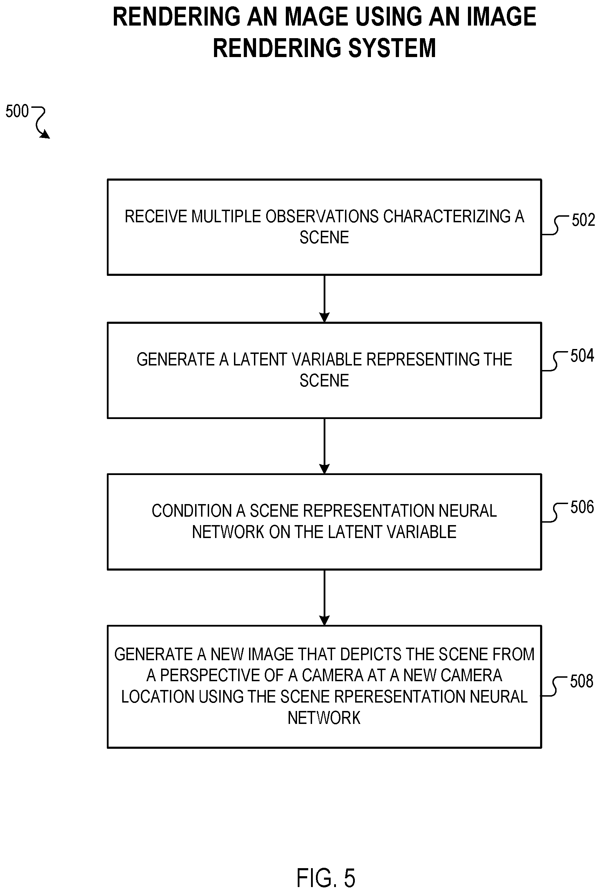

FIG. 5 is a flow diagram of an example process 500 for rendering a new image using an image rendering system. For convenience, the process 500 will be described as being performed by a system of one or more computers located in one or more locations. For example, an image rendering system, e.g., the system 100 in FIG. 1, appropriately programmed in accordance with this specification, can perform the process 500.

The system receives multiple observations characterizing a scene (502). Each observation can include: (i) an image of the scene, and (ii) data identifying a location of a camera that captured the image of the scene.

The system generates a latent variable representing the scene from the observations characterizing the scene (504). In some implementations, the system can use the observations to generate parameters of a probability distribution over a space of latent variables. For example, the system can generate a representation of each observation, process each representation using an encoding neural network to generate a corresponding embedding of each observation, and generate the parameters of the probability distribution from the embeddings.

As a particular example, the system can, e.g., average the embeddings, and then process the average of the embeddings by one or more neural network layers to generate the parameters of the probability distribution over the space of latent variables. For example the system may generate a combined embedding $h$ as described above, and process this using an MLP to generate the parameters of the probability distribution.

As another particular example the system can generate the parameters of the probability distribution over the space of latent variable using an iterative process. More specifically, the system can initialize current parameters of the probability distribution to default (e.g., predefined or random) values. After initializing the current parameters, for each time step in a sequence of time steps, the system can sample a current latent variable from the space of latent variables in accordance with the current probability distribution over the space of latent variables e.g. conditioned on in one of the observations 302 characterizing the scene. The current probability distribution may be conditioned on multiple, e.g. all of, the observations by averaging their embeddings as described above. The system can then condition the scene representation neural network on the current latent variable, and render an image that depicts the scene from a perspective of a camera at a target camera location using the scene representation neural network conditioned on the current latent variable. The target camera location may be the location of the camera in one of the observations 302 characterizing the scene.

At each time step, the system can determine a gradient, with respect to the current parameters of the probability distribution over the space of latent variables, of an objective function, e.g., the objective function described with reference to equation (6) below. Lastly, at each time step, the system can update the current parameters of the probability distribution over the space of latent variables using: (i) the gradient of the objective function with respect to the current parameters of the probability distribution, and (ii) the embeddings of the training observations, i.e., that are generated using the embedding neural network.

For example, the system can process one of the observations 302, e.g. the observation corresponding to the target camera location, using the encoding neural network to generate an embedding of the observation $E(C)$. Then the system can determine the current parameters $\lambda_{t+1}$ of the probability distribution at time step $t + 1$ as:

$$\lambda_{t+1} = \lambda_t + f\big(E(C), \nabla_{\lambda_t} L\big)$$

where $\lambda_t$ are the parameters of the probability distribution at time step $t$, $\nabla_{\lambda_t} L$ denotes the gradient of the objective function $L$, e.g. as defined in equation (6) below, with respect to $\lambda_t$, and $f(\cdot)$ is a recurrent "refinement" neural network e.g. an LSTM (Long Short Term Memory) followed by a linear layer to map the LSTM output to the parameters $\lambda_t$. Thus the refinement neural network may be a neural network that processes an embedding of an observation and the gradient of the objective function with respect to the current parameters of the probability distribution, to generate an update to the current parameters. In some cases only a subset of pixels in the image of an observation may be processed to calculate the gradient of $L$.

After generating the parameters of the probability distribution over the space of latent variables, the system can sample the latent variable representing the scene from the space of latent variables in accordance with the probability distribution.

The system conditions a scene representation neural network on the latent variable representing the scene (506). The scene representation neural network can define a geometric model of the scene as a three-dimensional (3D) radiance field. In some implementations, the scene representation neural network can receive a representation of a spatial location in the scene and a representation of a viewing direction. The neural network can process these representations, and the latent variable representing the scene, to generate an output that defines a radiance emitted in the viewing direction at the spatial location in the scene.

The system renders the new image that depicts the scene from the perspective of the camera at the new camera location using the scene representation neural network conditioned on the latent variable representing the scene (508). For example, the system can project radiance values from the geometric model of the scene as a 3D radiance field onto an image plane of the camera at the new camera location.

In some implementations, the system can render the new image based on rays corresponding to each pixel in the image. Specifically, the system can identify a ray corresponding to the pixel that projects into the scene from the image plane of the camera at the new camera location (in the direction that the camera is pointing). The system can determine, for each of multiple spatial locations on the ray, a radiance emitted in a direction of the ray at the spatial location on the ray using the scene representation neural network conditioned on the latent variable representing the scene. Then, the system can render a color of the pixel in the new image based on the radiances emitted in the direction of the ray at the spatial locations on the ray.

In some implementations, for each of multiple spatial locations on the ray, the system can determine a volume density of the scene at the spatial location which characterizes a likelihood that the ray would terminate at the spatial location. Then, the system can render the color of the pixel in the new image based on both the radiances emitted in the direction of the ray and the volume densities at the spatial locations on the ray.

In some implementations, determining the radiance emitted in the direction of the ray at the spatial location and the volume density at the spatial location can include providing a representation of each of the spatial location on, and the direction of, the ray to the scene representation neural network conditioned on the latent variable representing the scene to generate an output that defines the radiance emitted in the direction of the ray at the spatial location and the volume density at the spatial location.

In some implementations, rendering the color of the pixel in the new image based on both the radiances emitted in the direction of the ray and the volume densities at the spatial locations on the ray can include accumulating the radiances emitted in the direction of the ray and the volume densities at the spatial locations on the ray.

Generally, the scene representation neural network has a set of scene representation neural network parameters, and the encoding neural network has a set of encoding neural network parameters. The scene representation neural network and the encoding neural network can be jointly trained to determine trained values of their respective neural network parameters from initial values of their respective neural network parameters. For example, the system can train the scene representation neural network and the encoding neural network on observations from multiple scenes.

FIG. 6 is a flow diagram of an example process 600 for training an encoding neural network and a scene representation neural network included in an image rendering system (e.g., the system 100 in FIG. 1.

As described above with reference to FIG. 1, the image rendering system can include a training engine that can train the scene representation neural network and the encoding neural network on a set of training data over multiple training iterations. In some implementations, the training engine can jointly train the scene representation neural network and the encoding neural network, e.g., by backpropagating gradients of an objective function through the scene representation neural network and into the encoding neural network.

The training data can include a collection of training examples, where each training example includes a set of observations of a particular scene, e.g., images depicting the scene from different viewing perspectives, and data identifying the respective locations of the camera. The set of observations of each scene can be partitioned into: (i) a set of training observations, and (ii) a set of target observations.

The system can train the encoding neural network and the scene representation neural network on each training example in the training data. For convenience, the steps of FIG. 6 describe training the encoding neural network and the scene representation neural network on a particular training example.

The system processes the training observations to generate a latent variable representing the scene (602). Example techniques for processing observations to generate a latent variable representing a scene using an encoding neural network are described above with reference to steps 502-504 of FIG. 5.

The system conditions the scene representation neural network on the latent variable representing the scene (604).

The system generates a respective predicted image corresponding to each target observation using: (i) the scene representation neural network conditioned on the latent variable, and (ii) the camera location specified by the target observation (606). In some cases, rather than generating a pixel value for each pixel in a predicted image, the system generates a respective probability distribution over a set of possible pixel values for each pixel in the predicted image. An example process for rendering a predicted image using a scene representation neural network defining a 3D geometric model of an environment is described above with reference to FIG. 2.

The system determines gradients of an objective function that depends on the predicted images of the scene rendered using the scene representation neural network, e.g., using backpropagation techniques (608). The objective function can be any appropriate objective function, e.g., a variational objective function (e.g., an evidence lower bound function). For example, the objective function $L$, evaluated for a target image specified by a target observation, can be given by:

$$L = E_{z \sim q}[log p_\theta(I \,|z, c)] - KL(q_\lambda(z \,|C) \,\|\, p(z)) \qquad (6)$$

where $p_\theta(I|z, c)$ characterizes an error between the predicted image and the target image, $q_\lambda(z\,|C)$ denotes the probability distribution over the space of latent variables, $p(z)$ denotes a predefined prior distribution over the space of latent variables, and $KL(q_\lambda(z\,|C) \,\|\, p(z))$ denotes a divergence (e.g., a Kullback-Leibler divergence) between $q_\lambda(z\,|C)$ and $p(z)$. In some implementations, $p_\theta(I|z, c)$ defines a product of a likelihood of the value of each pixel in the target image under a probability distribution generated for the pixel using the scene representation neural network. In other implementations, $p_\theta(I|z, c)$ can denote an error, e.g., an $L_2$ error, between the predicted image and the target image.

In some implementations the system may maintain two instances of the scene representation neural network 320, one based on a coarse set of 3D points and another based on a finer set of 3D points. These may be conditioned on the same latent variable and their outputs combined to render an image. During training equation (6) may then have an additional likelihood term ($log p_\theta(I)$).

The training engine can update the parameter values of the scene representation neural network and the parameter values of the encoding neural network using the gradients, e.g., using any appropriate gradient descent optimization algorithm, e.g., Adam or RMSprop.

In some cases the system can iteratively optimize the parameters of the probability distribution. More specifically, the system can initialize current parameters of the probability distribution to default (e.g., predefined or random) values. After initializing the current parameters, for each time step in a sequence of time steps, the system can sample a current latent variable from the space of latent variables in accordance with the current probability distribution over the space of latent variables. The system can then condition the scene representation neural network on the current latent variable, and render an image that depicts the scene from a perspective of a camera at a target camera location (as specified by the target observation) using the scene representation neural network conditioned on the current latent variable.

At each time step, the system can determine a gradient, with respect to the current parameters of the probability distribution over the space of latent variables, of an objective function, e.g., the objective function described with reference to equation (6). Lastly, at each time step, the system can update the current parameters of the probability distribution over the space of latent variables using: (i) the gradient of the objective function with respect to the current parameters of the probability distribution, and (ii) the embeddings of the training observations, i.e., that are generated using the embedding neural network. For example, the system can determine the current parameters $\lambda_{t+1}$ of the probability distribution at time step $t + 1$ as:

$$\lambda_{t+1} = \lambda_t + f\big(E(C), \nabla_{\lambda_t} L\big) \qquad (7)$$

where $\lambda_t$ are the parameters of the probability distribution at time step $t$, $E(C)$ denotes an average of the embeddings of the training observations, $\nabla_{\lambda_t} L$ denotes the gradient of the objective function with respect to $\lambda_t$, and $f(\cdot)$ is a "refinement" neural network, e.g. as previously described. The parameters of the refinement neural network may be trained together with the parameter values of the encoding neural network.

After determining optimized parameters of the probability distribution over the latent space, the system can sample a latent variable in accordance with the optimized probability distribution, and then proceed to perform steps 604-610 using the latent variable sampled form the optimized probability distribution.

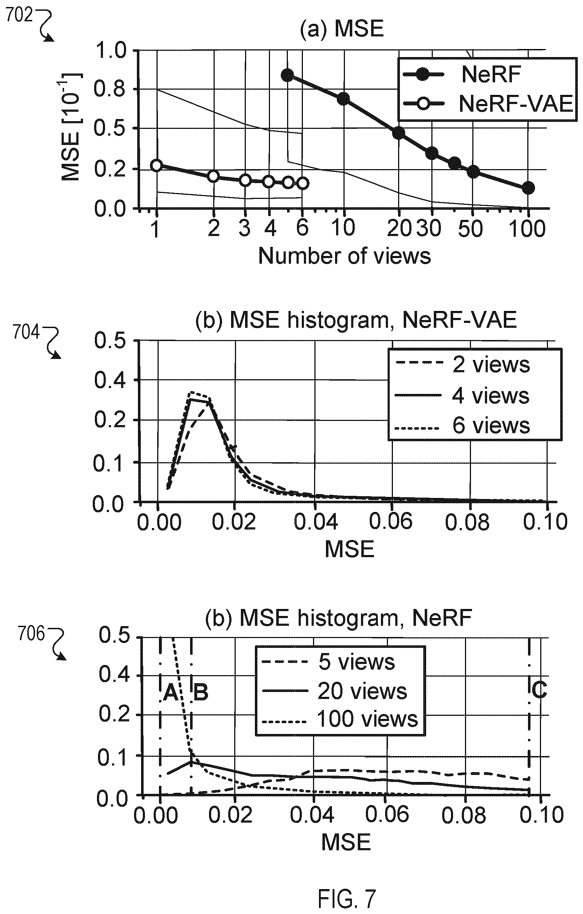

FIG. 7 illustrates experimental results achieved using the image rendering system described in this specification. In particular, graph 702 plots the mean squared error (MSE) of images generated by: (i) the image rendering system described in this specification (red line), and (ii) an alternative image rendering system (blue line). The MSE is plotted against "number of views," e.g., representing the number of observations used by the image rendering system to generate the latent variable used to condition the scene representation neural network. Graph 704 shows a histogram of the MSE of images generated by the image rendering system described in this specification, and graph 706 shows a histogram of the MSE of images generated by the alternative image rendering system. It can be appreciated that the image rendering system described in this specification significantly outperforms the alternative image rendering system.

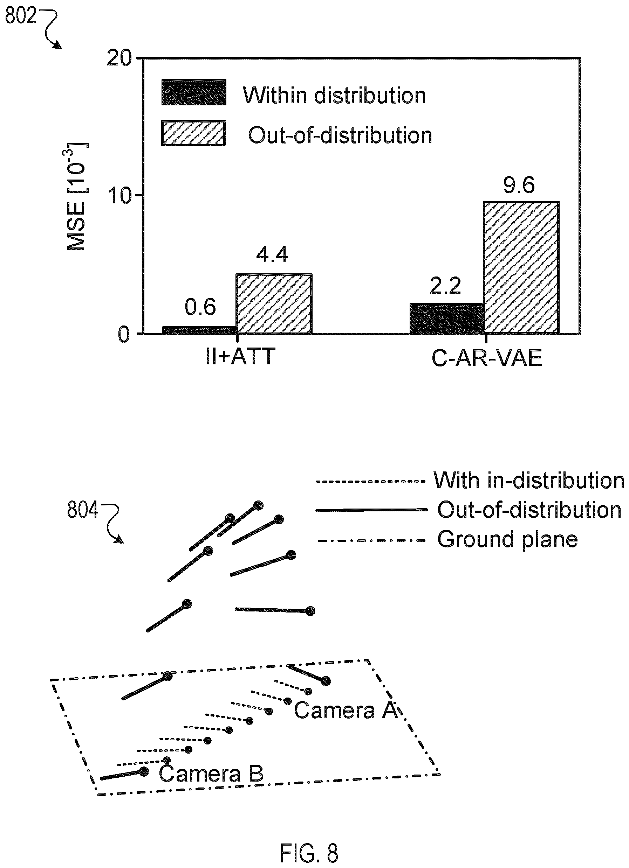

FIG. 8 compares the prediction accuracy of images generated using: (i) the image rendering system described in this specification ("II+ATT"), and (ii) an alternative image rendering system ("C-AR-VAE"). It can be appreciated that the image rendering system described in this specification achieves a lower MSE for generating images from "within distribution" viewpoints and "out-of-distribution" viewpoints. A viewpoint of a new image can be referred to as within distribution if it is drawn from the same distribution as the viewpoints of a set of existing images of the scene, e.g., that are used to generate the latent variable for conditioning the scene representation neural network. Conversely, a viewpoint of a new image can be referred to as out-of-distribution if it is drawn from a different distribution as the viewpoints of the set of existing images of the scene e.g. if the viewpoint lies outside the support of the training data distribution. Diagram 804 provides an illustration that contrasts within distribution viewpoints and out-of-distribution viewpoints.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

In this specification the term "engine" is used broadly to refer to a software-based system, subsystem, or process that is programmed to perform one or more specific functions. Generally, an engine will be implemented as one or more software modules or components, installed on one or more computers in one or more locations. In some cases, one or more computers will be dedicated to a particular engine; in other cases, multiple engines can be installed and running on the same computer or computers.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone that is running a messaging application, and receiving responsive messages from the user in return.

Data processing apparatus for implementing machine learning models can also include, for example, special-purpose hardware accelerator units for processing common and compute-intensive parts of machine learning training or production, i.e., inference, workloads.

Machine learning models can be implemented and deployed using a machine learning framework, e.g., a TensorFlow framework, a Microsoft Cognitive Toolkit framework, an Apache Singa framework, or an Apache MXNet framework.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

**Claims**

1.  A method performed by one or more data processing apparatus (100) for rendering a new image (108) that depicts a scene (125) from a perspective of a camera at a new camera location (126d), the method comprising:

    receiving a plurality of observations (102; 302) characterizing the scene, wherein each observation comprises: (i) an image of the scene, and (ii) data identifying a location of a camera (126a-c) that captured the image of the scene;
    generating a latent variable (104; 304) representing the scene from the plurality of observations characterizing the scene;
    conditioning a scene representation neural network (120; 320) on the latent variable representing the scene, wherein the scene representation neural network conditioned on the latent variable representing the scene defines a geometric model of the scene as a three-dimensional (3D) radiance field and is configured to:

receive a representation of a spatial location in the scene (106) and a representation of a viewing direction (107); and

process the representation of the spatial location in the scene, the representation of the viewing direction, and the latent variable representing the scene to generate an output that defines a radiance emitted in the viewing direction at the spatial location in the scene; and

rendering the new image that depicts the scene from the perspective of the camera at the new camera location using the scene representation neural network conditioned on the latent variable representing the scene by projecting radiance values from the geometric model of the scene as a 3D radiance field onto an image plane of the camera at the new camera location.

2. The method of claim 1, wherein generating the latent variable representing the scene from the plurality of observations characterizing the scene comprises:

generating parameters ($\lambda$) of a probability distribution over a space of latent variables from the plurality of observations characterizing the scene; and
sampling the latent variable representing the scene from the space of latent variables in accordance with the probability distribution over the space of latent variables.

3. The method of claim 2, wherein generating parameters of the probability distribution over the space of latent variables from the plurality of observations characterizing the scene comprises:

generating a respective representation of each observation (302);
processing the respective representation of each observation using an encoding neural network (110; 310) to generate a corresponding embedding ($h_k$) of each observation; and
generating the parameters of the probability distribution over the space of latent variables from the embeddings of the observations.

4. The method of claim 3, wherein generating the parameters of the probability distribution over the space of latent variables from the embeddings of the observations comprises either A):

averaging the embeddings of the observations, wherein the parameters of the probability distribution over the space of latent variables is based on the average of the embeddings of the observations; or B)
initializing current parameters of a current probability distribution over the space of latent variables; and
for each time step in a sequence of time steps:

sampling a current latent variable from the space of latent variables in accordance with the current probability distribution over the space of latent variables;
conditioning the scene representation neural network on the current latent variable;
rendering an image that depicts the scene from a perspective of a camera at a target camera location using the scene representation neural network conditioned on the current latent variable;
determining a gradient ($\nabla_{\lambda_t} L$), with respect to the current parameters of the current probability distribution over the space of latent variables, of an objective function that depends on: (i) the rendered image that depicts the scene from the perspective of the camera at the target camera location, and (ii) a target image of the scene captured from the camera at the target camera location; and
updating the current parameters of the current probability distribution over the space of latent variables using: (i) the gradient of the objective function, and (ii) the embeddings of the observations.

5. The method of claim 3 or 4, generating the respective representation of each observation comprises, for each pixel in the image of the scene, concatenating data defining the orientation of a corresponding ray to the pixel.

6. The method of any preceding claim, wherein the latent variable representing the scene comprises a plurality of latent sub-variables.

7. The method of claim 6, wherein the scene representation neural network comprises a sequence of one or more update blocks (BAB), wherein each update block is configured to:

receive a current joint embedding of the spatial location in the scene and the viewing direction;

update the current joint embedding of the spatial location in the scene and the viewing direction using attention over one or more of the plurality of latent sub-variables of the latent variable; in particular wherein the attention is multi-head query-key-value (QKV) attention.

8. The method of claim 7, wherein processing the representation of the spatial location in the scene, the representation of the viewing direction, and the latent variable representing the scene to generate an output that defines the radiance emitted in the viewing direction at the spatial location in the scene comprises:

generating a joint embedding of the spatial location in the scene and the viewing direction from the representation of the spatial location in the scene and the representation of the viewing direction; updating the joint embedding using each update block in the sequence of one or more update blocks; and generating the output that defines the radiance emitted in the viewing direction at the spatial location in the scene from the updated joint embedding generated by a final update block in the sequence of update blocks.

9. The method of any one of claims 7-8, wherein each latent sub-variable comprises a plurality of channels, wherein each update block is assigned a respective latent sub-variable, and wherein for each update block, updating the current joint embedding using attention over one or more of the plurality of latent sub-variables of the latent variable comprises: updating the current joint embedding using attention over only the latent sub-variable that is assigned to the update block.

10. The method of any one of claims 1-9, wherein rendering the new image comprises, for each pixel of the new image:

identifying a ray corresponding to the pixel that projects into the scene from the image plane of the camera at the new camera location; determining, for each of a plurality of spatial locations on the ray, a radiance emitted in a direction of the ray at the spatial location on the ray using the scene representation neural network conditioned on the latent variable representing the scene; rendering a color ($(r, g, b)$) of the pixel in the new image based on the radiances emitted in the direction of the ray at the plurality of spatial locations on the ray.

11. The method of claim 10, further comprising:

determining, for each of the plurality of spatial locations on the ray, a volume density ($\sigma$) of the scene at the spatial location which characterizes a likelihood that the ray would terminate at the spatial location; and rendering the color of the pixel in the new image based on both the radiances emitted in the direction of the ray and the volume densities at the plurality of spatial locations on the ray; in particular wherein for each of the plurality of spatial locations on the ray, determining the radiance emitted in the direction of the ray at the spatial location and the volume density at the spatial location comprises: providing a representation of the spatial location on the ray and a representation of the direction of the ray to the scene representation neural network conditioned on the latent variable representing the scene to generate an output that defines the radiance emitted in the direction of the ray at the spatial location and the volume density at the spatial location.

12. The method of claim 11, wherein rendering the color of the pixel in the new image based on both the radiances emitted in the direction of the ray and the volume densities at the plurality of spatial locations on the ray comprises: accumulating the radiances emitted in the direction of the ray and the volume densities at the plurality of spatial locations on the ray.

13. The method of any preceding claim, wherein the scene representation neural network has a plurality of neural network parameters, wherein before being used to render the new image of the scene, the scene representation neural network is trained to determine trained values of the neural network parameters from initial values of the neural network parameters, wherein training the scene representation neural network comprises, for each of a plurality of other scenes:

conditioning the scene representation neural network on a latent variable representing the other scene; and rendering one or more images that each depict the other scene from the perspective of a camera at a location in the other scene using the scene representation neural network conditioned on the latent variable representing the other scene; and

updating current values of the neural network parameters of the scene representation neural network using gradients of an objective function that depends on the images of the other scene rendered using the scene representation neural network conditioned on the latent variable representing the other scene.

14. One or more non-transitory computer storage media storing instructions that when executed by one or more computers cause the one or more computers to perform operations of the respective method of any one of claims 1-13.

15. A system comprising:

one or more computers; and
one or more storage devices communicatively coupled to the one or more computers, wherein the one or more storage devices store instructions that, when executed by the one or more computers, cause the one or more computers to perform operations of the respective method of any one of claims 1-13.

## Patentansprüche

1. Verfahren, das von einer oder mehreren Datenverarbeitungsvorrichtungen (100) durchgeführt wird, zum Rendern eines neuen Bildes (108), das eine Szene (125) aus einer Perspektive einer Kamera an einem neuen Kamerastandort (126d) darstellt, wobei das Verfahren umfasst:

Empfangen einer Vielzahl von Beobachtungen (102; 302), die die Szene charakterisieren, wobei jede Beobachtung umfasst: (i) ein Bild der Szene und (ii) Daten, die einen Standort einer Kamera (126a-c) identifizieren, die das Bild der Szene aufgenommen hat;
Erzeugen einer latenten Variablen (104; 304), die die Szene repräsentiert, aus der Vielzahl von Beobachtungen, die die Szene charakterisieren;
Konditionieren eines Szenenrepräsentations-Neuronalen-Netzwerks (120; 320) auf die latente Variable, die die Szene repräsentiert, wobei das Szenenrepräsentations-Neuronale-Netzwerk, das auf die latente Variable konditioniert ist, die die Szene repräsentiert, ein geometrisches Modell der Szene als ein dreidimensionales (3D) Strahlungsfeld definiert und konfiguriert ist zum:

Empfangen einer Repräsentation eines räumlichen Standorts in der Szene (106) und einer Repräsentation einer Blickrichtung (107); und
Verarbeiten der Repräsentation des räumlichen Standorts in der Szene, der Repräsentation der Blickrichtung und der latenten Variablen, die die Szene repräsentiert, um eine Ausgabe zu erzeugen, die eine Strahlung definiert, die in der Blickrichtung an dem räumlichen Standort in der Szene emittiert wird; und
Rendern des neuen Bildes, das die Szene aus der Perspektive der Kamera an dem neuen Kamerastandort darstellt, unter Verwendung des Szenenrepräsentations-Neuronalen-Netzwerks, das auf die latente Variable konditioniert ist, die die Szene repräsentiert, durch Projizieren von Strahlungswerten aus dem geometrischen Modell der Szene als ein 3D-Strahlungsfeld auf eine Bildebene der Kamera an dem neuen Kamerastandort.

2. Verfahren nach Anspruch 1, wobei das Erzeugen der latenten Variablen, die die Szene repräsentiert, aus der Vielzahl von Beobachtungen, die die Szene charakterisieren, umfasst:

Erzeugen von Parametern (A) einer Wahrscheinlichkeitsverteilung über einen Raum von latenten Variablen aus der Vielzahl von Beobachtungen, die die Szene charakterisieren; und
Abtasten der latenten Variablen, die die Szene repräsentiert, aus dem Raum von latenten Variablen in Übereinstimmung mit der Wahrscheinlichkeitsverteilung über den Raum von latenten Variablen.

3. Verfahren nach Anspruch 2, wobei das Erzeugen von Parametern der Wahrscheinlichkeitsverteilung über den Raum von latenten Variablen aus der Vielzahl von Beobachtungen, die die Szene charakterisieren, umfasst:

Erzeugen einer jeweiligen Repräsentation jeder Beobachtung (302);
Verarbeiten der jeweiligen Repräsentation jeder Beobachtung unter Verwendung eines Codierungs-Neuronalen-Netzwerks (110; 310), um eine entsprechende Einbettung ($h_k$) jeder Beobachtung zu erzeugen; und

Erzeugen der Parameter der Wahrscheinlichkeitsverteilung über den Raum von latenten Variablen aus den Einbettungen der Beobachtungen.

4. Verfahren nach Anspruch 3, wobei das Erzeugen der Parameter der Wahrscheinlichkeitsverteilung über den Raum von latenten Variablen aus den Einbettungen der Beobachtungen entweder A) umfasst:

Mitteln der Einbettungen der Beobachtungen, wobei die Parameter der Wahrscheinlichkeitsverteilung über den Raum von latenten Variablen auf dem Mittelwert der Einbettungen der Beobachtungen basieren; oder B) Initialisieren aktueller Parameter einer aktuellen Wahrscheinlichkeitsverteilung über den Raum von latenten Variablen; und
für jeden Zeitschritt in einer Sequenz von Zeitschritten:

Abtasten einer aktuellen latenten Variablen aus dem Raum von latenten Variablen in Übereinstimmung mit der aktuellen Wahrscheinlichkeitsverteilung über den Raum von latenten Variablen;
Konditionieren des Szenenrepräsentations-Neuronalen-Netzwerks auf die aktuelle latente Variable;
Rendern eines Bildes, das die Szene aus einer Perspektive einer Kamera an einem Zielkamerastandort darstellt, unter Verwendung des Szenenrepräsentations-Neuronalen-Netzwerks, das auf die aktuelle latente Variable konditioniert ist;
Bestimmen eines Gradienten ($\nabla_{\lambda t} L$), in Bezug auf die aktuellen Parameter der aktuellen Wahrscheinlichkeitsverteilung über den Raum von latenten Variablen, einer Zielfunktion, die abhängt von: (i) dem gerenderten Bild, das die Szene aus der Perspektive der Kamera an dem Zielkamerastandort darstellt, und (ii) einem Zielbild der Szene, das von der Kamera an dem Zielkamerastandort aufgenommen wurde; und
Aktualisieren der aktuellen Parameter der aktuellen Wahrscheinlichkeitsverteilung über den Raum von latenten Variablen unter Verwendung von: (i) dem Gradienten der Zielfunktion und (ii) den Einbettungen der Beobachtungen.

5. Verfahren nach Anspruch 3 oder 4, wobei das Erzeugen der jeweiligen Repräsentation jeder Beobachtung für jedes Pixel in dem Bild der Szene das Verketten von Daten umfasst, die die Orientierung eines entsprechenden Strahls zu dem Pixel definieren.

6. Verfahren nach einem der vorhergehenden Ansprüche, wobei die latente Variable, die die Szene repräsentiert, eine Vielzahl von latenten Subvariablen umfasst.

7. Verfahren nach Anspruch 6, wobei das Szenenrepräsentations-Neuronale-Netzwerk eine Sequenz von einem oder mehreren Aktualisierungsblöcken (BAB) umfasst, wobei jeder Aktualisierungsblock konfiguriert ist zum:

Empfangen einer aktuellen gemeinsamen Einbettung des räumlichen Standorts in der Szene und der Blickrichtung;
Aktualisieren der aktuellen gemeinsamen Einbettung des räumlichen Standorts in der Szene und der Blickrichtung unter Verwendung von Aufmerksamkeit über eine oder mehrere der Vielzahl von latenten Subvariablen der latenten Variable;
insbesondere wobei die Aufmerksamkeit Multi-Head-Query-Key-Value-(QKV)-Aufmerksamkeit ist.

8. Verfahren nach Anspruch 7, wobei das Verarbeiten der Repräsentation des räumlichen Standorts in der Szene, der Repräsentation der Blickrichtung und der latenten Variablen, die die Szene repräsentiert, um eine Ausgabe zu erzeugen, die die Strahlung definiert, die in der Blickrichtung an dem räumlichen Standort in der Szene emittiert wird, umfasst:

Erzeugen einer gemeinsamen Einbettung des räumlichen Standorts in der Szene und der Blickrichtung aus der Repräsentation des räumlichen Standorts in der Szene und der Repräsentation der Blickrichtung;
Aktualisieren der gemeinsamen Einbettung unter Verwendung jedes Aktualisierungsblocks in der Sequenz von einem oder mehreren Aktualisierungsblöcken; und
Erzeugen der Ausgabe, die die Strahlung definiert, die in der Blickrichtung an dem räumlichen Standort in der Szene emittiert wird, aus der aktualisierten gemeinsamen Einbettung, die durch einen letzten Aktualisierungsblock in der Sequenz von Aktualisierungsblöcken erzeugt wurde.

9. Verfahren nach einem der Ansprüche 7-8, wobei jede latente Subvariable eine Vielzahl von Kanälen umfasst, wobei jedem Aktualisierungsblock eine jeweilige latente Subvariable zugewiesen ist, und wobei für jeden Aktualisierungsblock das Aktualisieren der aktuellen gemeinsamen Einbettung unter Verwendung von Aufmerksamkeit über eine oder mehrere der Vielzahl von latenten Subvariablen der latenten Variable umfasst:
Aktualisieren der aktuellen gemeinsamen Einbettung unter Verwendung von Aufmerksamkeit nur über die latente Subvariable, die dem Aktualisierungsblock zugewiesen ist.

10. Verfahren nach einem der Ansprüche 1-9, wobei das Rendern des neuen Bildes für jedes Pixel des neuen Bildes umfasst:

Identifizieren eines Strahls, der dem Pixel entspricht, der von der Bildebene der Kamera an dem neuen Kamerastandort in die Szene projiziert;
Bestimmen, für jeden einer Vielzahl von räumlichen Standorten auf dem Strahl, einer Strahlung, die in einer Richtung des Strahls an dem räumlichen Standort auf dem Strahl emittiert wird, unter Verwendung des Szenenrepräsentations-Neuronalen-Netzwerks, das auf die latente Variable konditioniert ist, die die Szene repräsentiert;
Rendern einer Farbe (($r, g, b$)) des Pixels in dem neuen Bild basierend auf den Strahlungen, die in der Richtung des Strahls an der Vielzahl von räumlichen Standorten auf dem Strahl emittiert werden.

11. Verfahren nach Anspruch 10, ferner umfassend:

Bestimmen, für jeden der Vielzahl von räumlichen Standorten auf dem Strahl, einer Volumendichte ($\sigma$) der Szene an dem räumlichen Standort, die eine Wahrscheinlichkeit charakterisiert, dass der Strahl an dem räumlichen Standort enden würde; und
Rendern der Farbe des Pixels in dem neuen Bild basierend auf sowohl den Strahlungen, die in der Richtung des Strahls emittiert werden, als auch den Volumendichten an der Vielzahl von räumlichen Standorten auf dem Strahl; insbesondere
wobei für jeden der Vielzahl von räumlichen Standorten auf dem Strahl das Bestimmen der Strahlung, die in der Richtung des Strahls an dem räumlichen Standort emittiert wird, und der Volumendichte an dem räumlichen Standort umfasst:
Bereitstellen einer Repräsentation des räumlichen Standorts auf dem Strahl und einer Repräsentation der Richtung des Strahls an das Szenenrepräsentations-Neuronale-Netzwerk, das auf die latente Variable konditioniert ist, die die Szene repräsentiert, um eine Ausgabe zu erzeugen, die die Strahlung, die in der Richtung des Strahls an dem räumlichen Standort emittiert wird, und die Volumendichte an dem räumlichen Standort definiert.

12. Verfahren nach Anspruch 11, wobei das Rendern der Farbe des Pixels in dem neuen Bild basierend auf sowohl den Strahlungen, die in der Richtung des Strahls emittiert werden, als auch den Volumendichten an der Vielzahl von räumlichen Standorten auf dem Strahl umfasst:
Akkumulieren der Strahlungen, die in der Richtung des Strahls emittiert werden, und der Volumendichten an der Vielzahl von räumlichen Standorten auf dem Strahl.

13. Verfahren nach einem der vorhergehenden Ansprüche, wobei das Szenenrepräsentations-Neuronale-Netzwerk eine Vielzahl von neuronalen Netzwerkparametern aufweist, wobei das Szenenrepräsentations-Neuronale-Netzwerk, bevor es zum Rendern des neuen Bildes der Szene verwendet wird, trainiert wird, um trainierte Werte der neuronalen Netzwerkparameter aus Anfangswerten der neuronalen Netzwerkparameter zu bestimmen, wobei das Trainieren des Szenenrepräsentations-Neuronalen-Netzwerks für jede einer Vielzahl von anderen Szenen umfasst:

Konditionieren des Szenenrepräsentations-Neuronalen-Netzwerks auf eine latente Variable, die die andere Szene repräsentiert; und
Rendern eines oder mehrerer Bilder, die jeweils die andere Szene aus der Perspektive einer Kamera an einem Standort in der anderen Szene darstellen, unter Verwendung des Szenenrepräsentations-Neuronalen-Netzwerks, das auf die latente Variable konditioniert ist, die die andere Szene repräsentiert; und
Aktualisieren aktueller Werte der neuronalen Netzwerkparameter des Szenenrepräsentations-Neuronalen-Netzwerks unter Verwendung von Gradienten einer Zielfunktion, die von den Bildern der anderen Szene abhängt, die unter Verwendung des Szenenrepräsentations-Neuronalen-Netzwerks gerendert wurden, das auf die latente Variable konditioniert ist, die die andere Szene repräsentiert.

14. Ein oder mehrere nichtflüchtige Computerspeichermedien, die Anweisungen speichern, die, wenn sie von einem oder mehreren Computern ausgeführt werden, den einen oder die mehreren Computer veranlassen, Operationen des jeweiligen Verfahrens nach einem der Ansprüche 1-13 durchzuführen.

**15.** System, umfassend:

einen oder mehrere Computer; und

eine oder mehrere Speichervorrichtungen, die kommunikativ mit dem einen oder den mehreren Computern gekoppelt sind, wobei die eine oder die mehreren Speichervorrichtungen Anweisungen speichern, die, wenn sie von dem einen oder den mehreren Computern ausgeführt werden, den einen oder die mehreren Computer veranlassen, Operationen des jeweiligen Verfahrens nach einem der Ansprüche 1-13 durchzuführen.

**Revendications**

**1.** Procédé réalisé par un ou plusieurs appareils de traitement de données (100) pour rendre une nouvelle image (108) qui représente une scène (125) du point de vue d'une caméra située à un nouvel emplacement de caméra (126d), le procédé comprenant :

la réception d'une pluralité d'observations (102 ; 302) caractérisant la scène, dans lequel chaque observation comprend : (i) une image de la scène, et (ii) des données identifiant un emplacement d'une caméra (126a-c) qui a capturé l'image de la scène ;

la génération d'une variable latente (104 ; 304) représentant la scène à partir de la pluralité d'observations caractérisant la scène ;

le conditionnement d'un réseau neuronal de représentation de scène (120 ; 320) par la variable latente représentant la scène, dans lequel le réseau neuronal de représentation de scène conditionné par la variable latente représentant la scène définit un modèle géométrique de la scène sous la forme d'un champ de luminance tridimensionnel (3D) et est configuré pour :

recevoir une représentation d'un emplacement spatial dans la scène (106) et une représentation d'une direction de visualisation (107) ; et

traiter la représentation de l'emplacement spatial dans la scène, la représentation de la direction de visualisation et la variable latente représentant la scène pour générer une sortie qui définit une luminance émise dans la direction de visualisation à l'emplacement spatial dans la scène ; et

rendre la nouvelle image qui représente la scène du point de vue de la caméra située au nouvel emplacement de caméra, à l'aide du réseau neuronal de représentation de scène conditionné par la variable latente représentant la scène, en projetant des valeurs de luminance du modèle géométrique de la scène sous forme de champ de luminance 3D sur un plan image de la caméra située au nouvel emplacement de caméra.

**2.** Procédé selon la revendication 1, dans lequel la génération de la variable latente représentant la scène à partir de la pluralité d'observations caractérisant la scène comprend :

la génération de paramètres (A) d'une distribution de probabilité sur un espace de variables latentes à partir de la pluralité d'observations caractérisant la scène ; et

l'échantillonnage de la variable latente représentant la scène à partir de l'espace de variables latentes conformément à la distribution de probabilité sur l'espace de variables latentes.

**3.** Procédé selon la revendication 2, dans lequel la génération de paramètres de la distribution de probabilité sur l'espace de variables latentes à partir de la pluralité d'observations caractérisant la scène comprend :

la génération d'une représentation respective de chaque observation (302) ;

le traitement de la représentation respective de chaque observation à l'aide d'un réseau neuronal d'encodage (110 ; 310) pour générer un plongement correspondant ($h_k$) de chaque observation ; et

la génération des paramètres de la distribution de probabilité sur l'espace de variables latentes à partir des plongements des observations.

**4.** Procédé selon la revendication 3, dans lequel la génération des paramètres de la distribution de probabilité sur l'espace de variables latentes à partir des plongements des observations comprend soit A) :

la réalisation d'une moyenne des plongements des observations, dans lequel les paramètres de la distribution de probabilité sur l'espace de variables latentes sont basés sur la moyenne des plongements des observations ; soit B)

l'initialisation de paramètres actuels d'une distribution de probabilité actuelle sur l'espace de variables latentes ; et

pour chaque étape temporelle dans une séquence d'étapes temporelles :

l'échantillonnage d'une variable latente actuelle à partir de l'espace de variables latentes conformément à la distribution de probabilité actuelle sur l'espace de variables latentes ;

le conditionnement du réseau neuronal de représentation de scène par la variable latente actuelle ;

le rendu d'une image qui représente la scène du point de vue d'une caméra située à un emplacement cible de caméra, à l'aide du réseau neuronal de représentation de scène conditionné par la variable latente actuelle ;

la détermination d'un gradient ($\nabla_{\lambda t} L$), par rapport aux paramètres actuels de la distribution de probabilité actuelle sur l'espace de variables latentes, d'une fonction objectif qui dépend : (i) de l'image rendue qui représente la scène du point de vue de la caméra située à l'emplacement de caméra cible, et (ii) d'une image cible de la scène capturée par la caméra située à l'emplacement de caméra cible ; et

la mise à jour des paramètres actuels de la distribution de probabilité actuelle sur l'espace de variables latentes à l'aide : (i) du gradient de la fonction objectif, et (ii) des plongements des observations.

5. Procédé selon la revendication 3 ou 4, la génération de la représentation respective de chaque observation, comprend, pour chaque pixel de l'image de la scène, la concaténation de données définissant l'orientation d'un rayon correspondant au pixel.

6. Procédé selon une quelconque revendication précédente, dans lequel la variable latente représentant la scène comprend une pluralité de sous-variables latentes.

7. Procédé selon la revendication 6, dans lequel le réseau neuronal de représentation de scène comprend une séquence d'un ou de plusieurs blocs de mise à jour (BAB), dans lequel chaque bloc de mise à jour est configuré pour :

recevoir un plongement conjoint actuel de l'emplacement spatial dans la scène et de la direction de visualisation ;

mettre à jour le plongement conjoint actuel de l'emplacement spatial dans la scène et de la direction de visualisation à l'aide de l'attention sur une ou plusieurs de la pluralité de sous-variables latentes de la variable latente ; en particulier dans lequel l'attention est une attention de valeur clé d'interrogation (QKV) multi-têtes.

8. Procédé selon la revendication 7, dans lequel le traitement de la représentation de l'emplacement spatial dans la scène, la représentation de la direction de visualisation et de la variable latente représentant la scène pour générer une sortie qui définit une luminance émise dans la direction de visualisation à l'emplacement spatial dans la scène comprend :

la génération d'un plongement conjoint de l'emplacement spatial dans la scène et de la direction de visualisation à partir de la représentation de l'emplacement spatial dans la scène et de la représentation de la direction de visualisation ;

la mise à jour du plongement conjoint à l'aide de chaque bloc de mise à jour dans la séquence d'un ou de plusieurs blocs de mise à jour ; et

la génération de la sortie qui définit la luminance émise dans la direction de visualisation à l'emplacement spatial dans la scène à partir du plongement conjoint mis à jour généré par un bloc de mise à jour final dans la séquence de blocs de mise à jour.

9. Procédé selon l'une quelconque des revendications 7 et 8, dans lequel chaque sous-variable latente comprend une pluralité de canaux, dans lequel chaque bloc de mise à jour se voit attribuer une sous-variable latente respective, et dans lequel, pour chaque bloc de mise à jour, la mise à jour du plongement conjoint actuel à l'aide d'une attention sur une ou plusieurs de la pluralité de sous-variables latentes de la variable latente comprend :

la mise à jour du plongement conjoint actuel à l'aide de l'attention uniquement sur la sous-variable latente assignée au bloc de mise à jour.

10. Procédé selon l'une quelconque des revendications 1 à 9, dans lequel le rendu de la nouvelle image comprend, pour chaque pixel de la nouvelle image :

l'identification d'un rayon correspondant au pixel qui se projette dans la scène depuis le plan image de la caméra située au nouvel emplacement de caméra ;

la détermination, pour chacun d'une pluralité d'emplacements spatiaux sur le rayon, d'une luminance émise dans une direction du rayon à l'emplacement spatial sur le rayon à l'aide du réseau neuronal de représentation de scène conditionné par la variable latente représentant la scène ;

le rendu d'une couleur *((r, g, b))* du pixel dans la nouvelle image sur la base des luminances émises dans la direction du rayon à la pluralité d'emplacements spatiaux sur le rayon.

11. Procédé selon la revendication 10, comprenant également :

la détermination, pour chacun de la pluralité d'emplacements spatiaux sur le rayon, d'une densité volumique ($\sigma$) de la scène à l'emplacement spatial qui caractérise la probabilité que le rayon se termine à l'emplacement spatial ; et

le rendu de la couleur du pixel dans la nouvelle image sur la base à la fois des luminances émises dans la direction du rayon et des densités volumiques à la pluralité d'emplacements spatiaux sur le rayon ; en particulier dans lequel, pour chacun de la pluralité d'emplacements spatiaux sur le rayon, la détermination de la luminance émise dans la direction du rayon à l'emplacement spatial et de la densité volumique à l'emplacement spatial comprend :

la fourniture d'une représentation de l'emplacement spatial sur le rayon et d'une représentation de la direction du rayon vers le réseau neuronal de représentation de scène conditionné par la variable latente représentant la scène pour générer une sortie qui définit la luminance émise dans la direction du rayon à l'emplacement spatial et la densité volumique à l'emplacement spatial.

12. Procédé selon la revendication 11, dans lequel le rendu de la couleur du pixel dans la nouvelle image sur la base à la fois des luminances émises dans la direction du rayon et des densités volumiques à la pluralité d'emplacements spatiaux sur le rayon comprend :

l'accumulation des luminances émises dans la direction du rayon et des densités volumiques à la pluralité d'emplacements spatiaux sur le rayon.

13. Procédé selon une quelconque revendication précédente, dans lequel le réseau neuronal de représentation de scène comporte une pluralité de paramètres de réseau neuronal, dans lequel, avant d'être utilisé pour rendre la nouvelle image de la scène, le réseau neuronal de représentation de scène est entraîné à déterminer des valeurs entraînées des paramètres de réseau neuronal à partir de valeurs initiales des paramètres de réseau neuronal, dans lequel l'entraînement du réseau neuronal de représentation de scène comprend, pour chacune d'une pluralité d'autres scènes :

le conditionnement du réseau neuronal de représentation de scène par la variable latente représentant l'autre scène ; et

le rendu d'une ou de plusieurs images qui représentent chacune l'autre scène du point de vue d'une caméra située à un emplacement dans l'autre scène, à l'aide du réseau neuronal de représentation de scène conditionné par la variable latente représentant l'autre scène ; et

la mise à jour de valeurs actuelles des paramètres de réseau neuronal du réseau neuronal de représentation de scène à l'aide de gradients d'une fonction objectif qui dépend des images de l'autre scène rendues à l'aide du réseau neuronal de représentation de scène conditionné par la variable latente représentant l'autre scène.

14. Un ou plusieurs supports de stockage informatique non transitoire stockant des instructions qui, lorsqu'elles sont exécutées par un ou plusieurs ordinateurs, amènent les un ou plusieurs ordinateurs à réaliser des opérations du procédé respectif selon l'une quelconque des revendications 1 à 13.

15. Système comprenant :

un ou plusieurs ordinateurs ; et

un ou plusieurs dispositifs de stockage couplés en communication aux un ou plusieurs ordinateurs, dans lequel les un ou plusieurs dispositifs de stockage stockent des instructions qui, lorsqu'elles sont exécutées par les un ou plusieurs ordinateurs, amènent les un ou plusieurs ordinateurs à réaliser des opérations du procédé respectif selon l'une quelconque des revendications 1 à 13.

# IMAGE RENDERING SYSTEM 100

FIG. 1

# FIG. 2

EP 4 272 176 B1

**VOLUMETRIC RENDERING OF AN IMAGE OF A SCENE**

# IMAGE RENDERING SYSTEM IN MORE DETAIL <u>300</u>

FIG. 3

EP 4 272 176 B1

# EXAMPLE SCENE REPRESENTATION NEURAL NETWORK <u>400</u>

FIG. 4

EP 4 272 176 B1

# RENDERING AN MAGE USING AN IMAGE RENDERING SYSTEM

500

| RECEIVE MULTIPLE OBSERVATIONS CHARACTERIZING A SCENE | 502 |

| GENERATE A LATENT VARIABLE REPRESENTING THE SCENE | 504 |

| CONDITION A SCENE REPRESENTATION NEURAL NETWORK ON THE LATENT VARIABLE | 506 |

| GENERATE A NEW IMAGE THAT DEPICTS THE SCENE FROM A PERSPECTIVE OF A CAMERA AT A NEW CAMERA LOCATION USING THE SCENE RPERESENTATION NEURAL NETWORK | 508 |

FIG. 5

# TRAINING AN ENCODING NEURAL NETWORK AND A SCENE RPERESENTATION NEURAL NETWORK

600

GENERATE A LATENT VARIABLE REPRESENTING A SCENE USING AN ENCODING NEURAL NETWORK — 602

CONDITION A SCENE REPRESENTATION NEURAL NETWORK ON THE LATENT VARIABLE REPRESENTING THE SCENE — 604

USE THE SCENE REPRESENTATION NEURAL NETWORK TO RENDER AN ESTIMATE OF A TARGET IMAGE REPRESENTING THE SCENE — 606

DETERMINE GRADIENTS OF OBJECTIVE FUNCTION — 608

UPDATE SCENE REPRESENTATION NEURAL NETWORK PARAMETERS AND ENCODING NEURAL NETWORK PARAMETERS USING GRADIENTS — 610

FIG. 6

FIG. 7

802

20

MSE [$10^{-3}$]

■ Within distribution

▨ Out-of-distribution

10

9.6

4.4

0.6

2.2

0

II+ATT                C-AR-VAE

804

---------- With in-distribution

———— Out-of-distribution

—·—·—·— Ground plane

Camera A

Camera B

FIG. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SCHWARZ et al.** GRAF: Generative Radiance Fields for 3D-Aware Image Synthesis. *arXiv:2007.02442v2*
- **YIN et al.** Novel View Synthesis on Unpaired Data by Conditional Deformable Variational Auto-Encoder. *ECCV 2020 Proceedings*, ISBN 978-3-030-58594-5, 87-103
- **MUTLU et al.** Training bidirectional generative adversarial networks with hints. *Pattern Recognition*, 01 July 2020, vol. 103, ISSN 0031-3203, 107320
- **MILDENHALL et al.** NeRF: Representing scenes as neural radiance fields for view synthesis. *arXiv:2003.08934v2*, 2020